# EUROPÄISCHE PATENTANMELDUNG

(11) **EP 2 933 274 A1**
(43) Veröffentlichungstag der Anmeldung: **21.10.2015**
(21) Anmeldenummer: 14164836.0
(22) Anmeldetag: 16.04.2014
(51) Int. Cl.: C08F 32/00, C08F 4/80, C08G 61/08

(54) **Verfahren zur Herstellung von Polymeren mittels ringöffnender Polymerisation**

(71) Anmelder: Evonik Degussa GmbH, 45128 Essen (DE)
(72) Erfinder: Kadyrov, Renat, 60389 Frankfurt (DE); Dumrath, Christa, 19053 Schwerin (DE); Beller, Matthias, 18211 Nienhagen (DE); Dumrath, Andreas, 19053 Schwerin (DE); Neumann, Helfried, 18055 Rostock (DE); Klein, Stephanie, 53359 Rheinbach (DE)

(57) **Zusammenfassung**

Die vorliegende Erfindung betrifft ein Verfahren zur Herstellung von Polymeren mittels ringöffnender, metathetischer Polymerisation bestehend aus den folgenden Schritten:
a) Bereitstellung einer Reaktionsmischung bestehend aus einem Cycloalken oder einem Cycloalkengemisch, b) Zugabe einer Ruthenium-Verbindung der allgemeinen Formel
RuX¹X²L¹ₐL²_{b} (I), wobei a = 0 oder 1, b = 1 oder 2, so dass gilt a + b = 2;
X¹, X² - unabhängig voneinander ausgewählte anionische Liganden; L¹ = neutraler π-bindender Ligand; L² = N-heterocyclisches Carben der Formel IIa, IIb oder IIc; c) Zugabe eines Reglers in einem Mol-Verhältnis im Bereich von 1:5 bis 1:1.000 bezogen auf das Cycloalken oder die Summe der Cycloalkene im Cycloalkengemisch, d) Umsetzung bei einer Temperatur in einem Bereich von 0°C bis 250°C.

## Beschreibung

Die vorliegende Erfindung betrifft ein Verfahren zur Herstellung von Polymeren mittels ringöffnender, metathetischer Polymerisation umfassend die folgenden Schritte:
a) Bereitstellung einer Reaktionsmischung bestehend aus einem Cycloalken oder einem Cycloalkengemisch, b) Zugabe einer Ruthenium-Verbindung der allgemeinen Formel RuX¹X²L¹ₐL²_{b} (I), wobei a = 0 oder 1, b = 1 oder 2, so dass gilt a + b = 2; X¹, X² = unabhängig voneinander ausgewählte anionische Liganden; L¹ = neutraler π-bindender Ligand; L² = N-heterocyclisches Carben der Formel IIa, IIb oder IIc; c) Zugabe eines Reglers in einem Mol-Verhältnis im Bereich von 1:5 bis 1:1.000 bezogen auf das Cycloalken oder die Summe der Cycloalkene im Cycloalkengemisch, d) Umsetzung bei einer Temperatur in einem Bereich von 0°C bis 250°C.

In den letzten Jahrzehnten hat sich die Olefin-Metathese als eine wirksame Kohlenstoff-Kohlenstoff-Verknüpfungsreaktion durchgesetzt und findet breite Anwendung in der organischen Synthese und Polymerwissenschaft, wobei die ringöffnende metathetische Polymerisation (ROMP) von Cycloalkenen einen eleganten und atomeffizienten Zugang zu linearen Polymeren ermöglicht (K. J. Ivin, J. C. Mol, Olefin Metathesis and Metathesis Polymerization, Academic Press, London, 1997; Handbook of Metathesis, R. H. Grubbs, Wiley-VCH, Weinheim, 2003, Vol. 1-3). Üblicherweise werden die Polymerisationsreaktionen durch eine Reihe von Übergangsmetallkomplexen, oft in Gegenwart eines Co-Katalysators, katalysiert. Als CoKatalysatoren werden vor allem Aluminium- und Zinn-Organyle eingesetzt. Industriell eingesetzte Verfahren zur Herstellung von Polyoctenameren, wie das Produkt Vestenamer® 8012 oder Vestenamer® 6213, werden durch sogenannte "ill-defined" WCl₆-basierte Katalysatoren in Gegenwart von Aluminium-Organylen, wie Diethylaluminiumchlorid (DEAC), hergestellt (DE 102010030510A1). Der Einsatz von Alkylierungsmitteln wie Aluminium-Organylen stellt allerdings ein Sicherheitsrisiko für Gesundheit und Umwelt dar, da diese leichtentzündlich sind, in Berührung mit Luft selbstentzündlich sind und in Berührung mit Wasser entzündliche Gase bilden, sowie starke Verätzungen der Haut und schwere Augenschäden verursachen. Die ROMP-Reaktionen müssen deshalb unter aufwendiger Prozessführung unter Inertgasatmosphäre sowie mit aufwendig aufgereinigten Monomeren durchgeführt werden. Außerdem werden große Mengen an Metallsalzen als Katalysator benötigt (DE 102010030510A1: 0,055mol% WCl₆ in Bezug auf das Monomer Cycloocten, WCl₆:Cycloocten = 1:1800), welche nach der Polymerisation von der Produktmischung abgetrennt werden müssen.

Neben den sogenannten "ill-defined" Katalysatorsytemen werden auch wohl-definierte Katalysatoren zum Beispiel für die Produktion von Polydicyclopentadien eingesetzt (US 6310121 B1, US 5939504). Insbesondere Ruthenium-Katalysatoren weisen eine erhöhte Toleranz gegenüber einer Vielzahl von verschiedenen funktionellen Gruppen und große Substratbreite auf. Besonders aktive Olefin-Metathese-Katalysatoren tragen zumeist sowohl Phosphan-Liganden als auch nucleophile heterocyclische Carben-Liganden (NHC-Liganden) und besitzen zusätzlich eine Metall-Carben-Struktur. Die zum Teil kommerziell erhältlichen Ru-Komplexe weisen die allgemeine Struktur RuX₂(=CR₂)LL' auf, wobei X ein anionischer Ligand ist, R ausgewählt wird aus der Gruppe bestehend aus Wasserstoff, (C₆-C₁₄)-Aryl und (C₃-C₁₄)-Heteroarylrest, und L und L' einen neutralen Elektronendonor-Liganden bezeichnen, wobei L ein N-heterocyclisches Carben und L' ein Phosphan ist. Die Synthese dieser Ruthenium-Carben-Komplexe ist vergleichsweise aufwendig, rohstoff-intensiv und teuer. Typische Syntheseprotokolle bestehen aus mehreren Stufen, wobei zum Teil aufwendige Prozessführung unter Inertgasatmosphäre, schwer zugängliche Ausgangsstoffe oder die Nutzung sicherheitsrelevanter Reaktionspartner benötigt werden. Insbesondere die Nutzung von Carben-Vorstufen, wie disubstituierte Cyclopropene (WO 93/20111), Diazoalkane (WO 97/06185) oder Acetylene (DE 19854869) stellen in technischem Maßstab ein erhebliches Sicherheitsrisiko dar und sollten demzufolge vermieden werden. Metallorganische Startmaterialien wie RuCl₂(PPh₃)₃ (Hill et al., Dalton 1999, 285-291) oder RuHCl(PPh₃)₃ (Hoffmann et al., Journal of Organometallic Chemistry 2002, 641, 220-226) werden unter Einsatz eines großen Überschusses an Triphenylphosphan (PPh₃) aus RuCl₃ hergestellt, wobei diese PPh₃-Liganden bei der anschließenden Katalysatorsynthese durch eine Ligandenaustauschreaktion verloren gehen. Neueste Syntheseverbesserungen können diesen Nachteil zum Teil durch die direkte Umsetzung von Tricyclohexylphosphan mit Rutheniumchlorid-Hydrat oder Ru(COD)Cl₂ zu den (PCy₃)₂RuCl₂-Carben-Komplexen kompensieren (WO 2009/124977). Es werden jedoch weiterhin große Mengen an PCy₃ oder PCy₃-Lösung benötigt. Außerdem wird bei der Synthese der zweiten Generation von Ruthenium-Carben-Komplexen einer dieser PCy₃-Liganden durch einen neutralen Elektronendonor-Liganden ausgetauscht, wodurch wiederum PCy₃ aus dem Komplex verloren geht. Preiswertere Alternativen zu Ruthenium-Phosphan-Komplexen sind neutrale oder anionische Ruthenium-Aryl-Komplexe nach der allgemeinen Struktur [RuX(=C=[C]ₙ=CR₂)L¹L²]Y (EP 0921129A1). X und R sind wie oben beschrieben definiert, Y sind anionische, schwach koordinierende Liganden, L¹ sind Phosphane, Phosphite, Phosphonite, Phosphinite, Arsane oder Stibene, L² ist Benzol oder ein substituiertes Benzolderivat, wie zum Beispiel p-Cymol. Nachteilig ist, dass auch für die Aktivität der Ruthenium-Aryl-Komplexe die Struktureinheit Ru=C=[C]ₙ=CR₂ relevant ist, welche wiederum die Nutzung von gefährlichen, schwer zugänglichen oder sehr empfindlichen Carben-Vorstufen voraussetzt.

Es ist bereits eine Vielzahl von Beispielen für "in situ" generierte katalytische Systeme aus verfügbaren Ruthenium-Vorstufen als alternativer Ansatz beschrieben worden. Zur Erzeugung des aktiven Katalysators werden dabei jedoch verschiedene Aktivierungsmethoden verwendet:
- Photochemische Aktivierung*
   o A. Hafner, A. Mühlebach, P. A. van der Schaaf, Angew. Chem. 1997, 109, 2213-2216; Angew. Chem. Int. Ed., 1997, 36, 2213-2216;
   o L. Delaude, A. Demonceau and A. F. Noels, Chem. Commun., 2001, 986-987;
   o A. Fürstner, and L. Ackermann, Chem. Commun., 1999, 95-96;
   o L. Jafarpour, J. Huang, E. D. Stevens, S. P. Nolan Organometallics 1999, 18, 3760-3763)
- Aktivierung über Carben-Vorstufen wie Trimethylsilyldiazomethan
   o A. W. Stumpf, E. Saive, A. Demonceau and A. F. Noels, Chem. Commun., 1995, 1127;
   o A. Demonceau, A. W. Stumpf, E. Saive and A. F. Noels, Macromolecules, 1997, 30, 2127)
- Aktivierung mit Alkinen
   o Y. Miyaki, T. Onishi, S. Ogoshi, H. Kurosawa, J. Organometallic Chem. 2000, 616,135-139;
   o J. Louie, R. H. Grubbs, Angew. Chem. Int. Ed.2001, 40, 247-249;
   o D. Sémeril, C. Bruneau, P. H. Dixneuf, Helv. Chim. Cata 2001, 84, 3335-3341;
   o D. Sémeril, C. Bruneau, P. H. Dixneuf Adv. Synth. Catal. 2002, 344, 585-595)

Zudem wurde in EP1197509A1 ein Verfahren zur ringöffnenden Polymerisation von Cycloolefinen beschrieben, bei dem auch ein Katalysator der allgemeinen Formel ((X₁)ₘ(L₁)ₙRu)_{z} eingesetzt werden kann, wobei X₁ unabhängig voneinander ausgewählte anionische Liganden sind und L₁ unabhängig voneinander ausgewählte neutrale Elektronendonorliganden sind, und wobei m eine ganze Zahl von 0 bis 4 ist, und n und z ganze Zahlen von 1 bis 4 sind.

Die Aufgabe der vorliegenden Erfindung ist es daher, ein Verfahren zur Herstellung von Polymeren mittels ringöffnender metathetischer Polymerisation bereitzustellen, bei dem der Katalysator aus preiswerten Ruthenium-Verbindungen generiert werden soll, aber ohne die zuvor beschriebenen Aktivierungsmittel auskommt. Zudem soll für die Polymerisation die Katalysatormenge verringert werden, wobei gleichzeitig eine verbesserte Aktivität des Katalysators erreicht werden soll.

Im Sinne der vorliegenden Erfindung bezeichnet der Begriff Polymer sowohl olefinische Oligomere oder Polymere, die durch ringöffnende Polymerisation von Cycloalkenen hergestellt werden, als auch aliphatische Oligomere oder Polymere, die durch die Hydrierung von durch ringöffnende Polymerisation erhaltenen olefinischen Oligomeren oder Polymeren hergestellt werden. Olefinische Oligomere oder Polymere werden auch Polyalkenamere genannt, die als Polyalken eines Cycloalkens aufgefasst werden können. Aliphatische Oligomere oder Polymere werden auch Polyalkanamere genannt.

Die technische Aufgabe wird gelöst durch ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 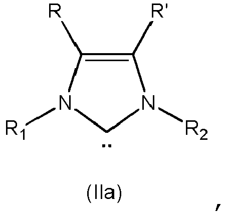 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 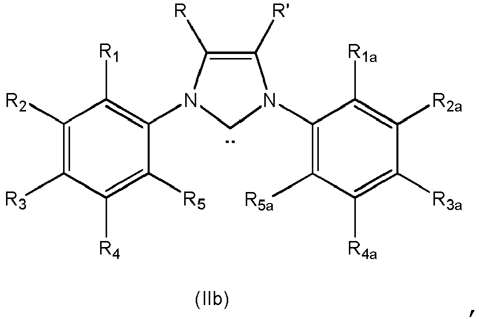 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 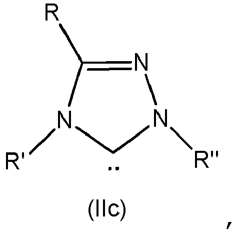 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R" unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C.

Im Sinne der vorliegenden Erfindung besteht die Reaktionsmischung aus einem Cycloalken oder einem Cycloalkengemisch. Cycloalkengemisch bedeutet zwei oder mehr Cycloalkene, insbesondere zwei, drei, oder vier Cycloalkene, wobei zwei Cycloalkene bevorzugt sind. Bevorzugt besteht die Reaktionsmischung aus einem Cycloalken.

Im Sinne der vorliegenden Erfindung bezieht sich der Begriff Cycloalken auf alle Arten von cyclischen Alkenen unabhängig davon, ob es cylische Mono-, Di- oder Polyene sind.

Die Cycloalkene können auch substituiert sein und dabei zusätzlich interne oder terminale C-C-Doppelbindungen enthalten.

Ein cyclisches substituiertes Alken mit internen C-C-Doppelbindungen an der Seitenkette bezeichnet ein cyclisches Alken dessen zusätzliche C-C-Doppelbindung sich nicht am alpha-Kohlenstoff der Seitenkette befindet, wobei das alpha-Kohlenstoffatom dasjenige Kohlenstoffatom bezeichnet, das am weitesten von der Verknüpfungsstelle mit dem Cycloalken entfernt ist.

Ein cyclisches substituiertes Alken mit terminalen C-C-Doppelbindungen bezeichnet ein cyclisches Alken dessen zusätzliche C-C-Doppelbindung sich am alpha-Kohlenstoff der Seitenkette befindet, wobei das alpha-Kohlenstoffatom dasjenige Kohlenstoffatom bezeichnet, das am weitesten von der Verknüpfungsstelle mit dem Cycloalken entfernt ist.

Die Substituenten der Cycloalkene werden ausgewählt aus der Gruppe bestehend aus
-{C₁-C₂₀}-Alkyl,
-{C₃-C₈}-Cycloalkyl,
-{C₃-C₇}-Heterocycloalkyl,
-{C₆-C₁₄}-Aryl,
-{C₃-C₁₄}-Heteroaryl,
-{C₆-C₁₄}-Aralkyl,
-{C₁-C₂₀}-Alkyloxy,
-{C₆-C₁₄}-Aryloxy,
-{C₆-C₁₄}-Aralkyloxy,
-{C₁-C₂₀}-Alkylthio,
-{C₆-C₁₄}-Arylthio,
-{C₆-C₁₄}-Aralkylthio,
-{C₁-C₈}-Acyl,
-{C₁-C₈}-Acyloxy,
-OH,
-NH₂,
-NH({C₁-C₂₀}-Alkyl),
-NH({C₆-C₁₄}-Aryl),
-NH({C₆-C₁₄}-Aralkyl),
-NH({C₁-C₈}-Acyl),
-NH({C₁-C₈}-Acyloxy),
-N({C₁-C₂₀}-Alkyl)₂,
-N({C₆-C₁₄}-Aryl)₂,
-N({C₆-C₁₄}-Aralkyl)₂,
-N({C₁-C₂₀}-Alkyl)({C₆-C₁₄}-Aryl),
-N({C₁-C₈}-Acyl)₂,
-NH3⁺,
-NH({C₁-C₂₀}-Alkyl)₂⁺,
-NH({C₆-C₁₄}-Aryl)₂⁺,
-NH({C₆-C₁₄}-Aralkyl)₂⁺,
-NH({C₁-C₂₀}-Alkyl)({C₆-C₁₄}-Aryl)⁺,
-NH({C₆-C₁₄}-Aryl)({C₁-C₂₀}-Alkyl)⁺,
-N({C₆-C₁₄}-Aryl)({C₁-C₂₀}-Alkyl)₂⁺,
-N({C₆-C₁₄}-Aryl)₂({C₁-C₂₀}-Alkyl)⁺,
-NO₂,
=O,
-C(=O)-O-{C₁-C₂₀}-Alkyl,
-C(=O)-O-{C₆-C₁₄}-Aryl,
-C(=O)-O-{C₆-C₁₄}-Aralkyl,
-O-C(=O)-O-{C₁-C₂₀}-Alkyl,
-O-C(=O)-O-{C₆-C₁₄}-Aryl,
-O-C(=O)-O-{C₆-C₁₄}-Aralkyl,
-NH-C(=O)-O-{C₁-C₂₀}-Alkyl,
-NH-C(=O)-O-{C₆-C₁₄}-Aryl,
-NH-C(=O)-O-{C₆-C₁₄}-Aralkyl,
-O-C(=O)-NH-{C₁-C₂₀}-Alkyl,
-O-C(=O)-NH-{C₆-C₁₄}-Aryl,
-O-C(=O)-NH-{C₆-C₁₄}-Aralkyl,
-NH-C(=O)-NH₂,
-NH-C(=O)-NH-{C₁-C₂₀}-Alkyl,
-NH-C(=O)-NH-{C₆-C₁₄}-Aryl,
-NH-C(=O)-NH-{C₆-C₁₄}-Aralkyl,
-CN,
-Halogen,
-C(=N-{C₁-C₂₀}-Alkyl)-{C₁-C₂₀}-Alkyl,
-C(=N-{C₆-C₁₄}-Aryl)-{C₁-C₂₀}-Alkyl,
-C(=N-{C₁-C₂₀}-Alkyl)-{C₆-C₁₄}-Aryl,
-C(=N-{C₆-C₁₄}-Aryl)-{C₆-C₁₄}-Aryl,
-SO₂-O-{C₁-C₂₀}-Alkyl,
-SO₂-O-C₆-C₁₄}-Aryl,
-SO₂-O-{C₆-C₁₄}-Aralkyl,
-SO₂-{C₁-C₂₀}-Alkyl,
-SO₂-{C₆-C₁₄}-Aryl,
-SO₂-{C₆-C₁₄}-Aralkyl,
-SO-{C₁-C₂₀}-Alkyl,
-SO-{C₆-C₁₄}-Aryl,
-SO-{C₆-C₁₄}-Aralkyl,
-Si({C₁-C₂₀}-Alkyl)₃,
-Si({C₆-C₁₄}-Aryl)₃,
-Si({C₆-C₁₄}-Aryl)({C₁-C₂₀}-Alkyl)₂,
-Si({C₆-C₁₄}-Aryl)₂({C₁-C₂₀}-Alkyl),
-{C₁-C₂₀}-Perfluoroalkyl,
-PO(O-{C₁-C₂₀}-Alkyl)₂,
-PO(O-{C₆-C₁₄}-Aryl)₂,
-PO(O-{C₁-C₂₀}-Alkyl)(O-{C₆-C₁₄}-Aryl),
-PO({C₁-C₂₀}-Alkyl)₂,
-PO({C₆-C₁₄}-Aryl)₂,
-PO({C₁-C₂₀}-Alkyl)({C₆-C₁₄}-Aryl).

Beispiele für Cycloalkene sind die cyclischen Alkene der allgemeinen Formeln (a)-(c), wobei n unabhängig voneinander 1, 2, 3, 4, 5, 6, 7, 8, 9, 10, 11, 12, 13, 14, 15, 16, 17, 18 sein kann, und 1 bis 4 Kohlenstoffatome durch je ein Heteroatom ausgewählt aus der Gruppe bestehend aus N, O, S, P und Si ersetzt sein können, und die Wasserstoffatome der Reste (CₙH₂ₙ), NH, PH, POH und SiH₂ substituiert sein können.

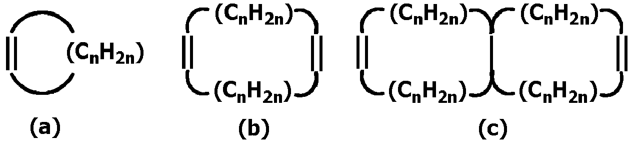

Bevorzugt sind cyclische Alkene der allgemeinen Formeln (a)-(c) mit einer Ringgröße von 5, 6, 7, 8, 9 oder 10 Kohlenstoffatomen, die unsubstituiert oder substituiert sein können, wobei die Substituenten aus der zuvor beschriebenen Gruppe an Substituenten für Cycloalkene ausgewählt werden.

Beispiele für bevorzugte Cycloalkene sind die folgenden Verbindungen 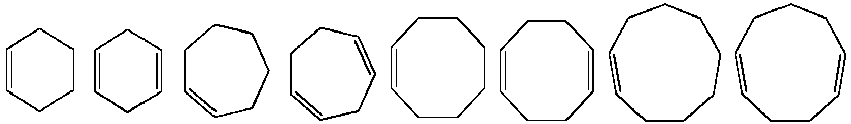 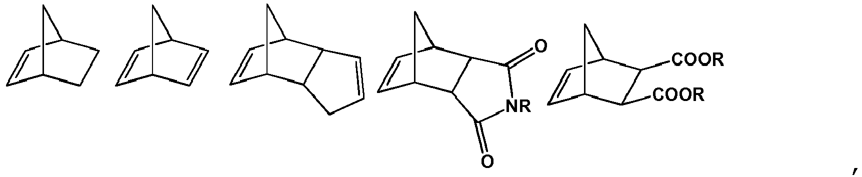 wobei R für (C₁-C₁₈)-Alkyl oder (C₆-C₁₂)-Aryl steht, wobei R = Methyl oder Ethyl bevorzugt ist.

### Besonders bevorzugt sind die Cycloalkene ausgewählt aus der Gruppe bestehend aus den folgenden Verbindungen

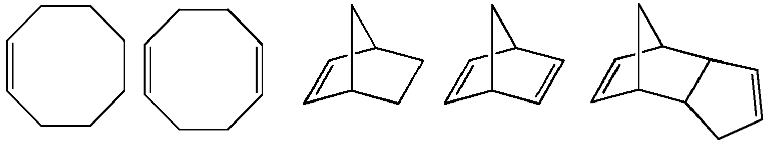

Im Sinne der vorliegenden Erfindung bezeichnet die Ruthenium-Verbindung der allgemeinen Formel RuX¹X²L¹ₐL²_{b} (I) eine Verbindung für die gilt
a = 0 oder 1; b = 1 oder 2, so dass gilt a + b = 2,
X¹, X² = unabhängig voneinander ausgewählte anionische Liganden;
L¹ = neutraler π-bindender Ligand;
L² = N-heterocyclisches Carben der Formel IIa, IIb oder IIc 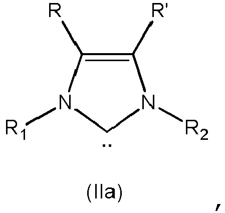 wobei
R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 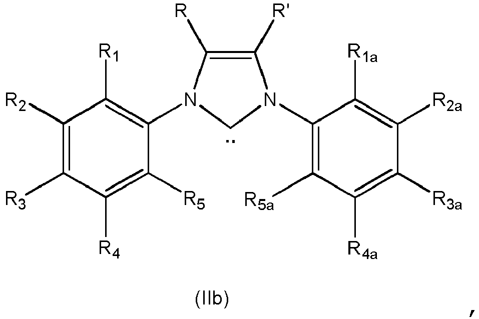 wobei
R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 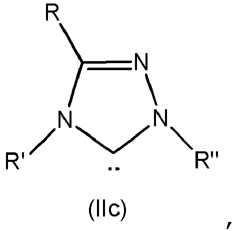 wobei
R ausgewählt wird aus der Gruppe bestehend aus H, Methyl, Ethyl, n-Propyl, iso-Propyl, n-Butyl, iso-Butyl, Phenyl, und p-Methoxyphenyl; und
R' und R" unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl.

### Beispiele für N-heterocyclische Carbene sind Verbindungen der Formeln III bis VIII:

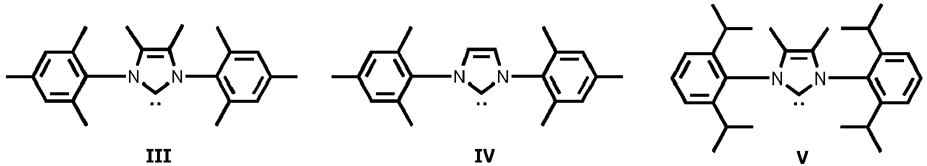

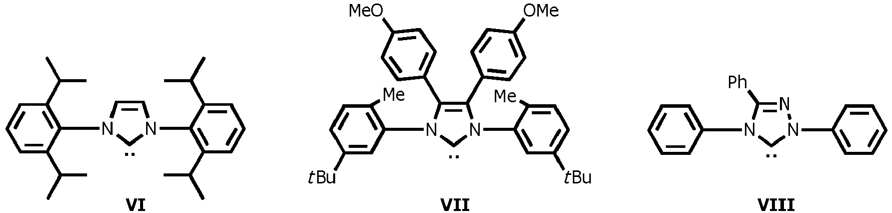

wobei die Verbindungen III, IV, VI und VII bevorzugt sind, wobei die Verbindungen III, VI und VII besonders bevorzugt sind.

N-heterocyclische Carbene können in situ erhalten werden durch thermische Aktivierung von Carben-Addukten oder die Kombination einer N-heterocyclischen Carben-Vorstufe und einer Base. Als Base kann dabei jede anorganische und organische Base eingesetzt werden, bevorzugt werden Stickstoffbasen oder Alkyloxybase eingesetzt. Besonders bevorzugt sind Alkyloxybasen, die ausgewählt werden aus der Gruppe enthaltend Natrium- oder Kaliumsalze von Methanolat, Ethanolat, Propanolat oder Butanolat und deren Isomere. Typische Beispiele für Carben-Addukte sind Addukte von N-heterocyclischen Carbenen mit Alkoholen, Chloroform, Pentafluorophenol, CO₂ und Boran.

Im Sinne der vorliegenden Erfindung bezeichnet ein anionischer Ligand einen einfach oder mehrfach negativ geladenen Liganden, der unabhängig voneinander ausgewählt wird aus der Gruppe bestehend aus Halogenid, Pseudohalogenid, Tetraphenylborat, Hexahalogenphosphat, Methansulfonat, Trihalogenomethansulfonat, Arylsulfonat, Alkoxid, Aryloxid, Carboxylat, Sulfat oder Phosphat. Pseudohalogenide sind Liganden, die sich chemisch ähnlich wie die Halogenide verhalten, wobei unter den Pseudohalogeniden Cyanid (CN⁻), Cyanat (OCN⁻), Thiocyanat oder Rhodanid (SCN⁻) bevorzugt sind. Bevorzugt sind anionische Liganden unabhängig voneinander ausgewählt aus der Gruppe bestehend aus den Halogeniden Fluorid, Chlorid, Bromid und Iodid, wobei Chlorid besonders bevorzugt ist.

Unter einem neutralen π-bindenden Liganden wird ein monocyclisches oder polycyclisches Aren verstanden, das auch Substituenten aufweisen kann, welche identisch oder nichtidentisch sein können, wobei die Substituenten ausgewählt werden aus der Gruppe bestehend aus (C₁-C₂₀)-Alkyl-, (C₆-C₁₄)-Aryl-, (C₁-C₂₀)-Alkyloxy-, (C₆-C₁₄)-Aryloxy-, (C₁-C₂₀)-Perfluoroalkyl-, (C₁-C₂₀)-Alkylthio-, (C₂-C₁₀)-Alkenylthio-, (C₂-C₁₀)-Alkenyl-, (C₂-C₁₀)-Alkinyl-, (C₂-C₁₀)-Alkenyloxy-, (C₂-C₁₀)-Alkinyloxy-, und Halogen. Die Substituenten können ihrerseits ebenfalls substituiert sein, wobei diese Substituenten ausgewählt werden aus der Gruppe bestehend aus Halogen, (C₁-C₈)-Alkyl, (C₁-C₈)-Alkyloxy, -NH₂, -NO, -NO₂, NH(C₁-C₈)-Alkyl, -N((C₁-C₈)-Alkyl)₂, -OH, -CF₃, -CₙF₂ₙ₊₁ (wobei n 2, 3, 4 oder 5 ist), NH(C₁-C₈)-Acyl, -N((C₁-C₈)-Acyl)₂, (C₁-C₈)-Acyl, (C₁-C₈)-Acyloxy, -SO₂-(C₁-C₈)-Alkyl, -SO₂-(C₆-C₁₄)-Aryl, -SO-(C₁-C₈)-Alkyl, -SO-(C₆-C₁₄)-Aryl, -PO(O-{C₁-C₂₀}-Alkyl)₂, -PO(O-{C₆-C₁₄}-Aryl)₂, -PO(O-{C₁-C₂₀}-Alkyl)(O-{C₆-C₁₄}-Aryl), -PO({C₁-C₂₀}-Alkyl)₂, -PO({C₆-C₁₄}-Aryl)₂, -PO({C₁-C₂₀}-Alkyl)({C₆-C₁₄}-Aryl).

Beispiele für neutrale π-bindende Liganden sind Benzol, Toluol, Xylol, p-Cymol, Trimethylbenzol, Tetramethylbenzol, Hexamethylbenzol, Tetrahydronaphthalin, und Naphthalin. Besonders bevorzugt wird der neutrale π-bindende Ligand ausgewählt aus der Gruppe bestehend aus Benzol, p-Cymol und Hexamethylbenzol.

Im Sinne der vorliegenden Erfindung ist (C₁-Cₙ)-Alkyl definiert als lineare oder verzweigte C₁-Cₙ-Alkylgruppe mit 1 bis n Kohlenstoffatomen. Typische Beispiele für C₁-Cₙ-Alkylgruppen sind Methyl, Ethyl, n-Propyl, Isopropyl, n-Butyl, Isobutyl, sec-Butyl, tert-Butyl, Pentyl, Hexyl, Heptyl, Octyl, Nonyl, Decyl, Dodecyl, oder Octadecyl samt aller ihrer Bindungsisomeren. Eine (C₁-Cₙ)-Alkylgruppe kann auch mit wenigstens einem Substituenten substituiert sein, wobei die Substituenten unabhängig voneinander ausgewählt werden aus der Gruppe bestehend aus Halogen, (C₁-C₈)-Alkyl, (C₁-C₈)-Alkyloxy, -NH₂, -NO, -NO₂, NH(C₁-C₈)-Alkyl, -N((C₁-C₈)-Alkyl)₂, -OH, -CF₃, -CₙF₂ₙ₊₁ (wobei n eine ganze Zahl von 2 bis 5 ist), NH(C₁-C₈)-Acyl, -N((C₁-C₈)-Acyl)₂, (C₁-C₈)-Acyl, (C₁-C₈)-Acyloxy, -SO₂-(C₁-C₈)-Alkyl, -SO₂- (C₆-C₁₄)-Aryl, -SO-(C₁-C₈)-Alkyl, -SO-(C₆-C₁₄)-Aryl, -PO(O-{C₁-C₂₀}-Alkyl)₂, -PO(O-{C₆-C₁₄}-Aryl)₂, -PO(O-{C₁-C₂₀}-Alkyl)(O-{C₆-C₁₄}-Aryl), -PO({C₁-C₂₀}-Alkyl)₂, -PO({C₆-C₁₄}-Aryl)₂, -PO({C₁-C₂₀}-Alkyl) ({C₆-C₁₄}-Aryl).

Im Sinne der vorliegenden Erfindung bezeichnet (C₃-Cₙ)-Cycloalkyl eine cyclische Alkylgruppe mit 3 bis n Kohlenstoffatomen, wobei mono-, bi- und tricyclische Alkylgruppen umfasst sind. Typische Beispiele sind Cyclopropyl, Cyclobutyl, Cyclopentyl, Cyclohexyl und Cycloheptyl. Eine (C₁-Cₙ)-Cycloalkylgruppe kann auch mit wenigstens einem Substituenten substitutiert sein, wobei die Substituenten unabhängig voneinander ausgewählt werden aus der Gruppe bestehend aus Halogen, (C₁-C₈)-Alkyl, (C₁-C₈)-Alkyloxy, -NH₂, -NO, -NO₂, NH(C₁-C₈)-Alkyl, -N((C₁-C₈)-Alkyl)₂, -OH, -CF₃, -CₙF₂ₙ₊₁ (wobei n eine ganze Zahl von 2 bis 5 ist), NH (C₁-C₈)-Acyl, -N((C₁-C₈)-Acyl)₂, (C₁-C₈)-Acyl, (C₁-C₈)-Acyloxy, -SO₂-(C₁-C₈)-Alkyl, -SO₂-(C₆-C₁₄)-Aryl, -SO-(C₁-C₈)-Alkyl, -SO-(C₆-C₁₄)-Aryl, -PO(O-{C₁-C₂₀}-Alkyl)₂,-PO(O-{C₆-C₁₄}-Aryl)₂, -PO(O-{C₁-C₂₀}-Alkyl)(O-{C₆-C₁₄}-Aryl), -PO({C₁-C₂₀}-Alkyl)₂, -PO({C₆-C₁₄}-Aryl)₂, -PO({C₁-C₂₀}-Alkyl) ({C₆-C₁₄}-Aryl).

Im Sinne der vorliegenden Erfindung bezeichnet (C₂-Cₙ)-Heterocycloalkyl eine cyclische Alkylgruppe mit 2 bis n Kohlenstoffatomen, wobei mono-, bi- und tricyclische Alkylgruppen umfasst sind, worin 1 oder 2 Kohlenstoffatome des Zyklus durch je ein Heteroatom ausgewählt aus der Gruppe bestehend aus N, O und S ersetzt sind. Eine (C₂-Cₙ)-Heterocycloalkylgruppe kann auch mit wenigstens einem Substituenten substitutiert sein, wobei die Substituenten unabhängig voneinander ausgewählt werden aus der Gruppe bestehend aus Halogen, (C₁-C₈)-Alkyl, (C₁-C₈)-Alkyloxy,-NH₂, -NO, -NO₂, NH(C₁-C₈)-Alkyl, - N((C₁-C₈)-Alkyl)₂, -OH,-CF₃, -CₙF₂ₙ₊₁ (wobei n eine ganze Zahl von 2 bis 5 ist), NH (C₁-C₈)-Acyl, -N((C₁-C₈)-Acyl)₂, (C₁-C₈)-Acyl, (C₁-C₈)-Acyloxy, -SO₂-(C₁-C₈)-Alkyl, -SO₂-(C₆-C₁₄)-Aryl, -SO-(C₁-C₈)-Alkyl, -SO-(C₆-C₁₄)-Aryl, -PO(O-{C₁-C₂₀}-Alkyl)₂, -PO(O-{C₆-C₁₄}-Aryl)₂, -PO(O-{C₁-C₂₀}-Alkyl)(O-{C₆-C₁₄}-Aryl), -PO({C₁-C₂₀}-Alkyl)₂, -PO({C₆-C₁₄}-Aryl)₂, -PO({C₁-C₂₀}-Alkyl)({C₆-C₁₄}-Aryl).
Typische Beispiele sind 2- oder 3-Tetrahydrofuryl, 1-, 2-oder 3-Pyrrolidinyl, 1-, 2-, 3- oder 4-Piperidinyl, 1-, 2-, oder 3-Morpholinyl, 1-, oder 2-Piperazinyl, 1-Caprolactyl. Im Sinne der vorliegenden Erfindung ist (C₆-Cₙ)-Aryl eine cyclische aromatische Gruppe mit 6 bis n Kohlenstoffatomen. Insbesondere zählen hierzu Verbindungen wie Phenyl-, Naphthyl-, Anthryl-, Phenanthryl-, Biphenylreste oder an das betreffende Molekül annelierte Systeme der vorbeschriebenen Art, wie z.B. Indenylsysteme. Eine (C₆-Cₙ)-Arylgruppe kann auch mit wenigstens einem Substituenten substitutiert sein, wobei die Substituenten unabhängig voneinander ausgewählt werden aus der Gruppe bestehend aus Halogen, (C₁-C₈)-Alkyl, (C₁-C₈)-Alkyloxy, -NH₂, -NO, -NO₂, NH (C₁-C₈)-Alkyl, -N((C₁-C₈)-Alkyl)₂, -OH, -CF₃, -CₙF₂ₙ₊₁ (wobei n eine ganze Zahl von 2 bis 5 ist), NH(C₁-C₈)-Acyl, -N((C₁-C₈)-Acyl)₂, (C₁-C₈)-Acyl, (C₁-C₈)-Acyloxy, -SO₂-(C₁-C₈)-Alkyl, -SO₂-(C₆-C₁₄)-Aryl, -SO-(C₁-C₈)-Alkyl, -SO-(C₆-C₁₄)-Aryl, -PO(O-{C₁-C₂₀}-Alkyl)₂, -PO(O-{C₆-C₁₄}-Aryl)₂,-PO(O-{C₁-C₂₀}-Alkyl)(O-{C₆-C₁₄}-Aryl), -PO({C₁-C₂₀}-Alkyl)₂,-PO({C₆-C₁₄}-Aryl)₂, -PO({C₁-C₂₀}-Alkyl)({C₆-C₁₄}-Aryl).

Im Sinne der vorliegenden Erfindung bezeichnet (C₃-Cₙ)-Heteroaryl ein fünf-, sechs- oder siebengliedriges aromatisches Ringsystem aus 3 bis n C-Atomen, wobei 1 bis 3 Kohlenstoffatome des Ringsystems durch je ein Heteroatom ausgewählt aus der Gruppe bestehend aus N, O und S ersetzt sind. Als solche Heteroarylgruppen werden insbesondere Gruppen angesehen, wie 2-, 3-Furyl, 2-, 3-Pyrrolyl, 2-, 3-Thienyl, 2-, 3-, 4-Pyridyl, 2-, 3-, 4-, 5-, 6-, 7-Indolyl, 3-, 4-, 5-Pyrazolyl, 2-, 4-, 5-Imidazolyl, Acridinyl, Chinolinyl, Phenanthridinyl, 2-, 4-, 5-, 6-Pyrimidinyl. Eine (C₃-Cₙ)-Heteroarylgruppe kann auch mit wenigstens einem Substituenten substitutiert sein, wobei die Substituenten unabhängig voneinander ausgewählt werden aus der Gruppe bestehend aus Halogen, (C₁-C₈)-Alkyl, (C₁-C₈)-Alkyloxy, -NH₂, -NO, -NO₂, NH(C₁-C₈)-Alkyl, -N((C₁-C₈)-Alkyl)₂, -OH, -CF₃, -CₙF₂ₙ₊₁ (wobei n eine ganze Zahl von 2 bis 5 ist), NH (C₁-C₈)-Acyl, -N((C₁-C₈)-Acyl)₂, (C₁-C₈)-Acyl, (C₁-C₈)-Acyloxy, -SO₂-(C₁-C₈)-Alkyl, -SO₂-(C₆-C₁₄)-Aryl, -SO-(C₁-C₈)-Alkyl, -SO-(C₆-C₁₄)-Aryl, -PO(O-{C₁-C₂₀}-Alkyl)₂,-PO(O-{C₆-C₁₄}-Aryl)₂, -PO(O-{C₁-C₂₀}-Alkyl)(O-{C₆-C₁₄}-Aryl), -PO({C₁-C₂₀}-Alkyl)₂, -PO({C₆-C₁₄}-Aryl)₂, -PO({C₁-C₂₀}-Alkyl) ({C₆-C₁₄}-Aryl).

Im Sinne der vorliegenden Erfindung bezeichnet (C₆-Cₙ)-Aralkyl eine Gruppe, die sowohl eine Alkyl- als auch eine Arylgruppe enthält und in Summe 6 bis n Kohlenstoffatome aufweist. Die Aralkylgruppe kann über jedes ihrer Kohlenstoffatome an das diese Gruppe tragende Molekül gebunden sein. Eine (C₆-Cₙ)-Aralkylgruppe kann auch mit wenigstens einem Substituenten substitutiert sein, wobei die Substituenten unabhängig voneinander ausgewählt werden aus der Gruppe bestehend aus Halogen, (C₁-C₈)-Alkyl, (C₁-C₈)-Alkyloxy, -NH₂, -NO, -NO₂, NH(C₁-C₈)-Alkyl, -N((C₁-C₈)-Alkyl)₂, -OH, -CF₃, -CₙF₂ₙ₊₁ (wobei n eine ganze Zahl von 2 bis 5 ist), NH (C₁-C₈)-Acyl, -N((C₁-C₈)-Acyl)₂, (C₁-C₈)-Acyl, (C₁-C₈)-Acyloxy, -SO₂-(C₁-C₈)-Alkyl, -SO₂-(C₆-C₁₄)-Aryl, -SO-(C₁-C₈)-Alkyl, -SO-(C₆-C₁₄)-Aryl, -PO(O-{C₁-C₂₀}-Alkyl)₂, -PO(O-{C₆-C₁₄}-Aryl)₂, -PO(O-{C₁-C₂₀}-Alkyl)(O-{C₆-C₁₄}-Aryl), -PO({C₁-C₂₀}-Alkyl)₂, -PO({C₆-C₁₄}-Aryl)₂,-PO({C₁-C₂₀}-Alkyl)({C₆-C₁₄}-Aryl).

Im Sinne der vorliegenden Erfindung ist (C₁-Cₙ)-Alkyloxy definiert als lineare oder verzweigte (C₁-Cₙ)-Alkylgruppe mit 1 bis n Kohlenstoffatomen mit der Maßgabe, dass diese über ein Sauerstoffatom an das diese Gruppe tragende Molekül gebunden ist.

Im Sinne der vorliegenden Erfindung ist (C₆-Cₙ)-Aryloxy definiert als (C₆-Cn)-Arylgruppe mit 6 bis n Kohlenstoffatomen mit der Maßgabe, dass diese über ein Sauerstoffatom an das diese Gruppe tragende Molekül gebunden ist.

Im Sinne der vorliegenden Erfindung ist (C₆-Cₙ)-Aralkyloxy definiert als (C₆-Cₙ)-Aralkylgruppe mit 6 bis n Kohlenstoffatomen mit der Maßgabe, dass diese über ein Sauerstoffatom an das diese Gruppe tragende Molekül gebunden ist.

Im Sinne der vorliegenden Erfindung ist (C₁-Cₙ)-Alkylthio definiert als lineare oder verzweigte (C₁-Cₙ)-Alkylgruppe mit 1 bis n Kohlenstoffatomen mit der Maßgabe, dass diese über ein Schwefelatom an das diese Gruppe tragende Molekül gebunden ist.

Im Sinne der vorliegenden Erfindung ist (C₆-Cₙ)-Arylthio definiert als (C₆-Cₙ)-Arylgruppe mit 6 bis n Kohlenstoffatomen mit der Maßgabe, dass diese über ein Schwefelatom an das diese Gruppe tragende Molekül gebunden ist.

Im Sinne der vorliegenden Erfindung ist (C₆-Cₙ)-Aralkylthio definiert als (C₆-Cₙ)-Aralkylgruppe mit 6 bis n Kohlenstoffatomen mit der Maßgabe, dass diese über ein Schwefelatom an das diese Gruppe tragende Molekül gebunden ist.

Im Sinne der vorliegenden Erfindung bezeichnet (C₁-Cₙ)-Acyl eine Gruppe mit der allgemeinen Struktur R-(C=0)- mit insgesamt 1 bis n Kohlenstoffatomen, wobei R ausgewählt wird aus der Gruppe bestehend aus H, (C₁-Cₙ₋₁)-Alkyl, (C₁-Cₙ₁)-Alkenyl, (C₆-Cₙ₋₁)-Aryl, (C₆-Cₙ₋₁)-Heteroaryl und (C₂-Cₙ₋₁)-Alkinyl.

Im Sinne der vorliegenden Erfindung bezeichnet (C₁-Cₙ)-Acyloxy eine Gruppe mit der allgemeinen Struktur R'-(C=O)O-mit insgesamt 1 bis n Kohlenstoffatomen, wobei R' ausgewählt wird aus der Gruppe bestehend aus H, (C₁-Cₙ₋₁)-Alkyl, (C₁-Cₙ₋₁)-Alkenyl, (C₆-Cₙ₋₁)-Aryl, (C₆-Cₙ₋₁)-Heteroaryl und (C₂-Cₙ₋₁)-Alkinyl.

Im Sinne der vorliegenden Erfindung ist (C₂-Cₙ)-Alkenyl definiert als lineare oder verzweigte (C₂-Cₙ)-Alkylgruppe mit 2 bis n Kohlenstoffatomen mit der Maßgabe, dass diese eine C-C-Doppelbindung aufweist.

Im Sinne der vorliegenden Erfindung ist (C₂-Cₙ)-Alkinyl definiert als lineare oder verzweigte (C₂-Cₙ)-Alkylgruppe mit 2 bis n Kohlenstoffatomen mit der Maßgabe, dass diese eine C-C-Dreifachbindung aufweist.

Im Sinne der vorliegenden Erfindung ist eine (C₂-Cₙ)-Alkylenbrücke definiert als eine divalente lineare (C₂-Cₙ)-Alkylgruppe mit 2 bis n Kohlenstoffatomen. Typische Beispiele sind Ethylen, n-Propylen, n-Butylen, n-Pentylen, n-Hexylen, n-Heptylen, n-Octylen, n-Nonylen, n-Decylen. Die (C₂-Cₙ)-Alkylengruppe kann auch Substituenten aufweisen, die ausgewählt werden aus der Gruppe bestehend aus (C₁-C₂₀)-Alkyl, (C₆-C₁₄)-Aryl, (C₂-C₁₀)-Alkenyl. Außerdem kann die (C₂-Cₙ)-Alkylengruppe ungesättigt sein, wobei der ungesättigte Abschnitt Teil eines aromatischen oder heteroaromatischen Systems sein kann.

Im Sinne der vorliegenden Erfindung ist eine (C₂-Cₙ)-Heteroalkylenbrücke definiert als eine divalente lineare (C₂-Cₙ)-Alkylgruppe mit 2 bis n Kohlenstoffatomen, wobei 1 oder 2 Kohlenstoffatome durch Heteroatome wie N, O, S ersetzt sind. Die (C₂-Cₙ)-Heteroalkylengruppe kann auch Substituenten aufweisen, die ausgewählt werden aus der Gruppe bestehend aus (C₁-C₂₀)-Alkyl, (C₆-C₁₄)-Aryl, (C₂-C₁₀)-Alkenyl. Außerdem kann die (C₂-Cₙ)-Heteroalkylengruppe ungesättigt sein, wobei der ungesättigte Abschnitt Teil eines heteroaromatischen Systems sein kann.

Das erfindungsgemäße Verfahren wird bei einer Temperatur in einem Bereich von 0°C bis 250°C durchgeführt, bevorzugt in einem Bereich von 40°C bis 100°C, besonders bevorzugt in einem Bereich von 50°C bis 80°C, und weiter bevorzugt in einem Bereich von 50°C bis 60°C.
Die Reaktionszeit ist nicht kritisch und liegt in einem Bereich von wenigen Minuten bis einigen Stunden, bevorzugt liegt sie in einem Bereich von 30 Minuten bis 2 Stunden. Das Verfahren wird im Allgemeinen unter Schutzgasatmosphäre durchgeführt, bevorzugt unter Stickstoff oder Argon, wobei die Anwesenheit von Sauerstoff unter bestimmten Umständen toleriert werden kann.
Das erfindungsgemäße Verfahren wird ohne Lösungsmittel durchgeführt. Die Ruthenium-Verbindung der allgemeinen Formel RuX¹X²L¹ₐL²_{b} (I) wird entweder (a) als Feststoff, oder (b) gelöst in einem Verdünnungsmittel ausgewählt aus der Gruppe bestehend aus Benzol, Toluol, Tetrahydrofuran, Dichlormethan, Dichlorethan, Trichlormethan, o-Xylol, m-Xylol, p-Xylol, Xylol-Isomerengemisch und Hexan; oder (c) als Suspension in einem Verdünnungsmittel ausgewählt aus der Gruppe bestehend aus Hexan, Heptan, Petrolbenzin und Mineralöl zur Reaktionsmischung zugegeben. Der Fachmann kann entscheiden, ob er die Ruthenium-Verbindung der allgemeinen Formel RuX¹X²L¹ₐL²_{b} (I) als Feststoff oder gelöst oder suspendiert in einem Verdünnungsmittel zugibt. Im Allgemeinen kann auf ein Verdünnungsmittel verzichtet werden, insbesondere wenn das Cycloalken oder das Cycloalkengemisch bei der gewünschten Reaktionstemperatur flüssig ist, oder ausreichend große Mengen an Ruthenium-Verbindung der allgemeinen Formel RuX¹X²L¹ₐL²_{b} (I) eingesetzt werden, die durch Einwiegen quantifiziert werden können. Falls erwünscht, wird zum Lösen ein Verdünnungsmittel ausgewählt aus der Gruppe bestehend aus Benzol, Toluol, Tetrahydrofuran, Dichlormethan, Dichlorethan, Trichlormethan, o-Xylol, m-Xylol, p-Xylol, Xylol-Isomerengemisch und Hexan eingesetzt. Bevorzugt wird das Verdünnungsmittel zum Lösen aus der Gruppe bestehend aus Dichlormethan, 1,2-Dichlorethan, Benzol, Toluol, Xylol, und Hexan ausgewählt. Falls erwünscht, wird zum Suspendieren ein Verdünnungsmittel ausgewählt aus der Gruppe bestehend aus Hexan, Heptan, Petrolbenzin und Mineralöl eingesetzt. Die Konzentration der Ruthenium-Verbindung der allgemeinen Formel RuX¹X²L¹ₐL²_{b} (I) im Verdünnungsmittel beträgt 0.001 mol/l bis 1 mol/l.

Im Sinne der vorliegenden Erfindung bezieht sich der Begriff Regler auf alle Arten von acyclischen Alkenen unabhängig davon, ob es Mono- oder Diene, ob es acyclische interne Alkene oder acyclische terminale Alkene sind, sowie auf Vinylcycloalkene und Allylacetat. Der Regler dient der Steuerung der Molekulargewichtsverteilung des Oligomers durch Terminierung der wachsenden Kette. Ein acyclisches internes Alken bezeichnet dabei ein Alken dessen C-C-Doppelbindung sich nicht am alpha-Kohlenstoff befindet. Ein acyclisches terminales Alken bezeichnet ein Alken dessen C-C-Doppelbindung sich am alpha-Kohlenstoff befindet.
Ein Dien bezeichnet ein Alken mit zwei C-C-Doppelbindungen. Ein acyclisches terminales Dien weist die C-C-Doppelbindungen am alpha- und omega-Kohlenstoffatom auf und ein acyclisches internes Dien weist die C-C-Doppelbindungen weder am alpha- noch am omega-Kohlenstoffatom auf.

### Beispiele für Regler sind Allylacetat sowie die Verbindungen der allgemeinen Formel (d) - (i)

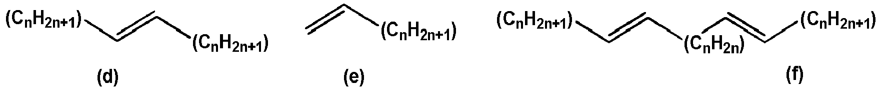

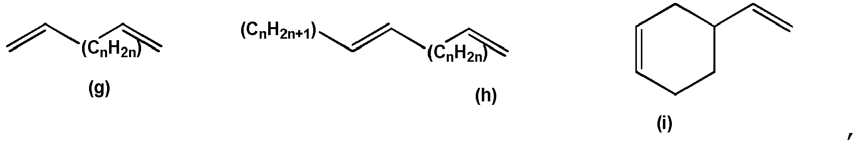

wobei n unabhängig voneinander 1, 2, 3, 4, 5, 6, 7, 8, 9, 10, 11, 12, 13, 14, 15, 16, 17 oder 18 sein kann.

Die Alkene können auch mit den nachfolgend beschriebenen Substituenten substituiert sein.

Die Substituenten der Regler werden ausgewählt aus der Gruppe bestehend aus
-{C₁-C₂₀}-Alkyl,
-{C₃-C₈}-Cycloalkyl,
-{C₃-C₇}-Heterocycloalkyl,
-{C₆-C₁₄}-Aryl,
-{C₃-C₁₄}-Heteroaryl,
-{C₆-C₁₄}-Aralkyl,
-{C₁-C₂₀}-Alkyloxy,
-{C₆-C₁₄}-Aryloxy,
-{C₆-C₁₄}-Aralkyloxy,
-{C₁-C₂₀}-Alkylthio,
-{C₆-C₁₄}-Arylthio,
-{C₆-C₁₄}-Aralkylthio,
-{C₁-C₈}-Acyl,
-{C₁-C₈}-Acyloxy,
-OH,
-C(=O)-O-{C₁-C₂₀}-Alkyl,
-C(=O)-O-{C₆-C₁₄}-Aryl,
-C(=O)-O-{C₆-C₁₄}-Aralkyl,
-CN,
-Halogen,
-{C₁-C₂₀}-Perfluoroalkyl.

### Bevorzugt sind die Regler ausgewählt aus der Gruppe bestehend aus Allylacetat und den folgenden Verbindungen

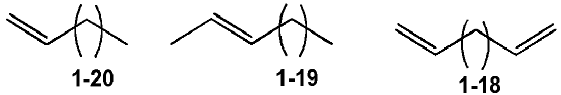

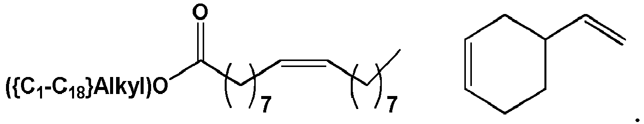

### Besonders bevorzugt sind die Regler ausgewählt aus der Gruppe bestehend aus Allylacetat und den folgenden Verbindungen

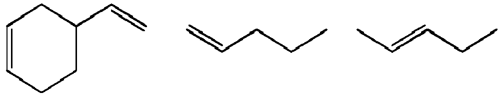

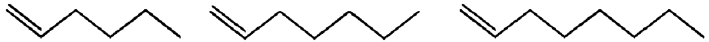

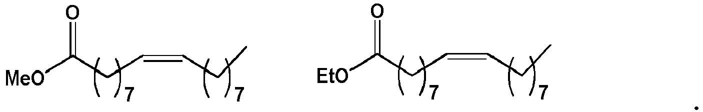

Im Sinne der vorliegenden Erfindung ist bei der ringöffnenden, metathetischen Polymerisation das Mol-Verhältnis der Ruthenium-Verbindung nicht kritisch und liegt im Bereich von 1:200 bis 1:1.000.000 bezogen auf das Cycloalken oder die Summe der Cycloalkene im Cycloalkengemisch, so dass gilt Stoffmenge(Ruthenium-Verbindung) : Stoffmenge(Cycloalken bzw. Cycloalkengemisch) = 1 : 200 bis 1 : 1.000.000. Bevorzugt liegt das Molverhältnis im Bereich von 1:1.000 bis 1:100.000 und besonders bevorzugt im Bereich von 1:10.000 bis 1:100.000. Das Mol-Verhältnis des Reglers liegt im Bereich von 1:5 bis 1:1.000 bezogen auf das Cycloalken oder die Summe der Cycloalkene im Cycloalkengemisch, so dass gilt Stoffmenge(Regler) : Stoffmenge(Cycloalken bzw. Cycloalkengemisch) = 1 : 5 bis 1 : 1.000. Bevorzugt liegt das Molverhältnis im Bereich von 1:6 bis 1:100 und besonders bevorzugt im Bereich von 1:6,6 bis 1:14,3.

Die Molmassenverteilung Mₙ des durch metathetische Polymerisation erhaltenen Polymers (Polyalkenamers) liegt in einem Bereich von 1.000 g/mol bis 150.000 g/mol, bevorzugt in einem Bereich von 1.000 g/mol bis 50.000 g/mol. Die Molmassenverteilung wird mittels Gelpermeationschromatographie (GPC) gegen Polystyrol gemessen.

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 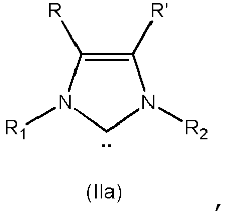 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 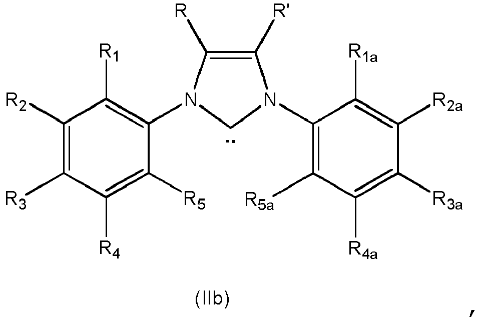 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 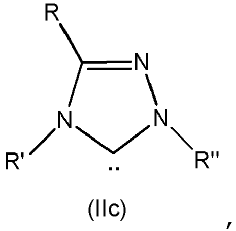 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R" unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
e. Zugabe eines Hydrierkatalysators,
f. Umsetzung bei einer Temperatur in einem Bereich von 0°C bis 250°C und bei einem Wasserstoffdruck in einem Bereich von 1 bar bis 100 bar.

Diese Ausführungsform des erfindungsgemäßen Verfahrens umfasst neben der ringöffnenden, metathetischen Polymerisationsreaktion (Schritte a-d) auch eine Hydrierreaktion (Schritte e + f). Das durch ringöffnende, metathetische Polymerisation erhaltene Polymer (Polyalkenamer) wird dabei nach Vollendung der Polymerisation ohne Aufarbeitung durch Zugabe eines Hydrierkatalysators unter Wasserstoffatmosphäre zum Polyalkanamer umgesetzt.

Für die Verfahrensschritte a) - d) gelten für die Begriffe Polymer, Reaktionsmischung, Cycloalken, Cycloalkengemisch, Ruthenium-Verbindung, Regler und die dazu gehörigen Erläuterungen, sowie die Temperatur und die Reaktionsbedingungen dieselben Bedingungen, die bereits zuvor genannt wurden.

Als Hydrierkatalysator können alle dem Fachmann für diesen Zweck in Frage kommenden Hydrierkatalysatoren ausgewählt werden. Bevorzugt werden solche Hydrierkatalysatoren eingesetzt, die ein aktives Metall der Gruppe VIII B des Periodensystems der Elemente enthalten. Bevorzugte Metalle sind Edelmetalle und Ni, insbesondere Ru, Rh, Pd, Pt und Ni. Die Metalle können im Hydrierkatalysator entweder (a) als solche oder in Form von Oxiden oder (b) als Metallkomplexe vorliegen.

In Fall (a) kann das Metall oder Metalloxid entweder auf einem Träger aufgebracht oder als Partikel eingesetzt werden. Das Trägermaterial ist nicht beschränkt, üblicherweise werden gewöhnliche Träger wie Aluminiumoxid, Siliciumdioxid, Eisenoxid, Magnesiumoxid, Zirkoniumdioxid, Kohlenstoff oder ähnliche dem Fachmann auf dem Gebiet der Hydrierung bekannte Träger eingesetzt. Der Gehalt an Metall oder Metalloxid auf dem Träger wird in einem Bereich von 1 Gew.-% bis 25 Gew.-% bezogen auf das Gesamtgewicht des Katalysators gewählt. Bevorzugt wird ein Gehalt von 1 bis 5 Gew.-% Metall oder Metalloxid auf dem Träger gewählt. Beispiele für derartige Hydrierkatalysatoren sind Pt/C, Pd/C, Ru/C, Pd/CaCO₃, Pd/Al₂O₃, Ru/Al₂O₃.

In Fall (b) können die Metalle auch in Form von MetallKomplexen als Hydrierkatalysatoren eingesetzt werden. Beispiele hierfür sind Metall-Komplexe der Metalle Rh, Ir oder Ru, wie z.B. der Wilkinson-Katalysator ClRh(PPh₃)₃ oder [(dppb)Rh(cod)]BF₄, [Ir(PCy₃)(C₅H₅N)(cod)]PF₆, [Cl₂Ru(PPh₃)₃] und [(dppb)Ru(metallyl)₂].

Die Temperatur, die während der Hydrierreaktion eingestellt wird, liegt in einem Bereich von 0°C bis 250°C, bevorzugt wird eine Temperatur in einem Bereich von 20°C bis 120°C eingestellt. Besonders bevorzugt wird eine Temperatur aus dem Bereich von 20°C bis 100°C eingestellt, ganz besonders bevorzugt wird eine Temperatur aus dem Bereich von 40°C bis 80°C eingestellt.

Die Reaktionszeit ist nicht kritisch und liegt in einem Bereich von wenigen Minuten bis einigen Stunden, bevorzugt liegt sie in einem Bereich von 2 Stunden bis 60 Stunden. Die Hydrierreaktion wird unter Wasserstoffgasatmosphäre durchgeführt, wobei der Wasserstoffdruck nicht kritisch ist und im Bereich von 1 bar bis 100 bar, bevorzugt von 1 bar bis 60 bar, besonders bevorzugt von 20 bar bis 50 bar liegt. Die Hydrierreaktion kann in allen Lösungsmitteln oder Lösungsmittelmischungen durchgeführt werden, die den Hydrierkatalysator nicht deaktivieren. Bevorzugt werden aprotische Lösungsmittel mit geringen Koordinationseigenschaften gewählt. Wenn die Polymermischung bei der gewünschten Reaktionstemperatur flüssig und rührbar ist, kann die Hydrierung bevorzugt ohne Lösungsmittel durchgeführt werden. Lösungsmittel werden bevorzugt aus der Gruppe bestehend aus Dichlormethan, 1,2-Dichlorethan, Benzol, Toluol, Xylol, Chlorobenzol und Hexan ausgewählt.

Bei der Hydrierreaktion ist das Mol-Verhältnis von Hydrierkatalysator zu Cycloalken, das in der vorhergehenden ringöffnenden metathetischen Polymerisation eingesetzt wird, nicht kritisch und liegt im Bereich von 1:100 bis 1:1.000.000, bevorzugt im Bereich von 1:1.000 bis 1:100.000 und besonders bevorzugt im Bereich von 1:1.000 bis 1:2.000.

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 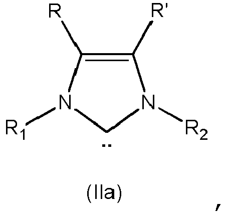 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 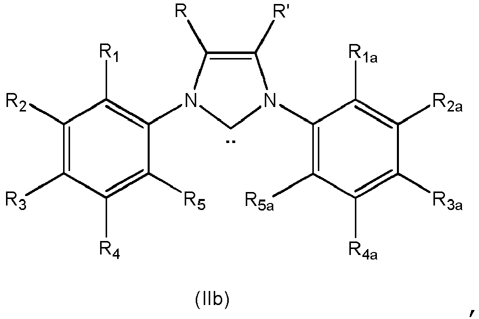 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 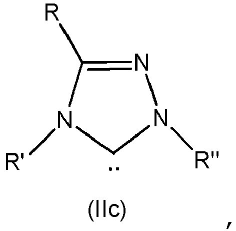 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R" unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird.

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 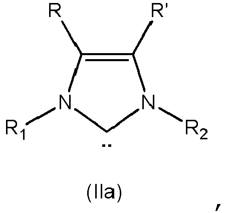 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 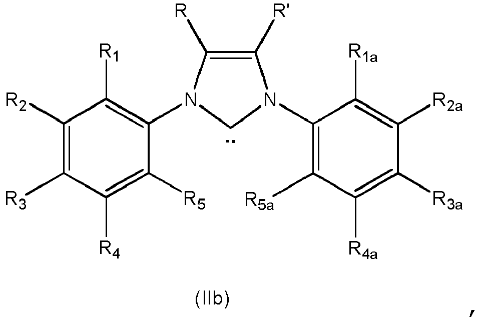 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 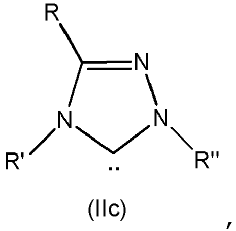 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und R' und R" unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird und wobei X¹ und X² gleich sind und Chlor sind, und wobei L¹ ausgewählt wird aus der Gruppe bestehend aus Benzol, Toluol, Xylol, p-Cymol, Trimethylbenzol, Tetramethylbenzol, Hexamethylbenzol, Tetrahydronaphthalin und Naphthalin.

Bevorzugte Ruthenium-Verbindungen der allgemeinen Formel

RuX¹X²L¹L² (VIII)

können Tabelle 1 entnommen werden.

**Tabelle 1: Bevorzugte Ruthenium-Verbindungen der allgemeinen Formel (VIII).**

| Ru-Verbindung | X¹, X² | L¹ | L² |
|---|---|---|---|
| 1 | Cl | Benzol | III |
| 2 | Cl | Benzol | IV |
| 3 | Cl | Benzol | VI |
| 4 | Cl | Benzol | VII |
| 5 | Cl | p-Cymol | III |
| 6 | Cl | p-Cymol | IV |
| 7 | Cl | p-Cymol | VI |
| 8 | Cl | p-Cymol | VII |
| 9 | Cl | Hexamethylbenzol | III |
| 10 | Cl | Hexamethylbenzol | IV |
| 11 | Cl | Hexamethylbenzol | VI |
| 12 | Cl | Hexamethylbenzol | VII |

Besonders bevorzugt sind die Verbindungen 5, 6, 7, und 8 aus Tabelle 1, wobei Verbindungen 5, 6 und 8 noch weiter bevorzugt sind.

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 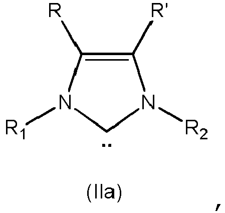 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 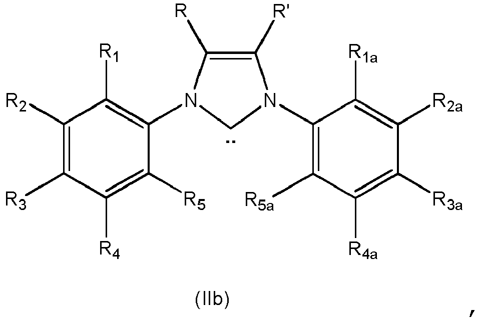 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 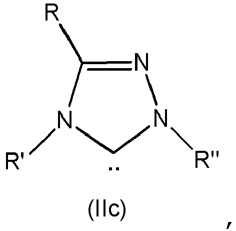 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R'' unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird, und wobei X¹ und X² gleich sind und Chlor sind, und wobei L¹ ausgewählt wird aus der Gruppe bestehend aus Benzol, Toluol, Xylol, p-Cymol, Trimethylbenzol, Tetramethylbenzol, Hexamethylbenzol, Tetrahydronaphthalin und Naphthalin, und L² ausgewählt wird aus der Gruppe bestehend aus N-heterocyclischen Carbenen der Formeln III, IV, VI und VII

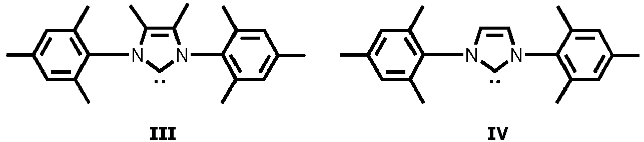

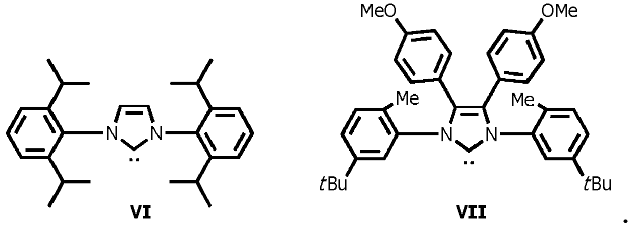

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 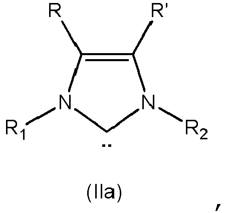 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 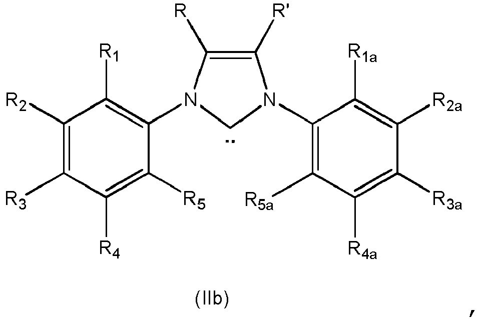 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 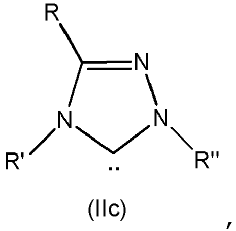 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R'' unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird, und wobei X¹ und X² gleich sind und Chlor sind, und wobei L¹ausgewählt wird aus der Gruppe bestehend aus Benzol, Toluol, Xylol, p-Cymol, Trimethylbenzol, Tetramethylbenzol, Hexamethylbenzol, Tetrahydronaphthalin und Naphthalin, und L² ausgewählt wird aus der Gruppe bestehend aus N-heterocyclischen Carbenen der Formeln III, IV und VII

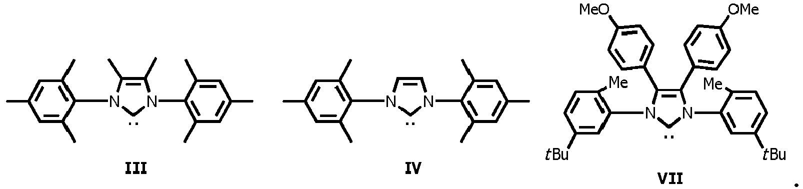

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cycloalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² ₌ N-heterocyclisches Carben der Formel IIa, IIb oder IIc 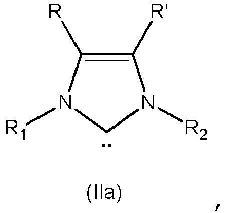 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 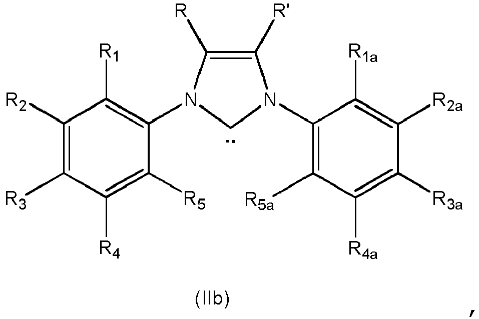 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 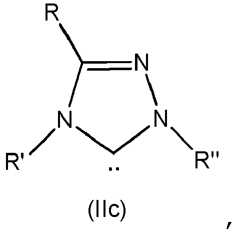 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R'' unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird, die ausgewählt wird aus der Gruppe bestehend aus den Verbindungen 5, 6, 7, und 8

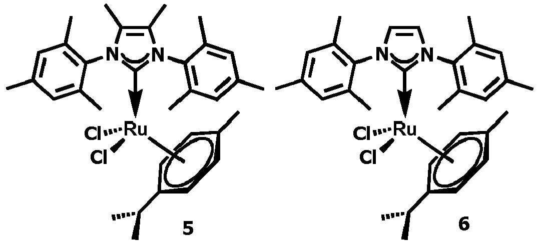

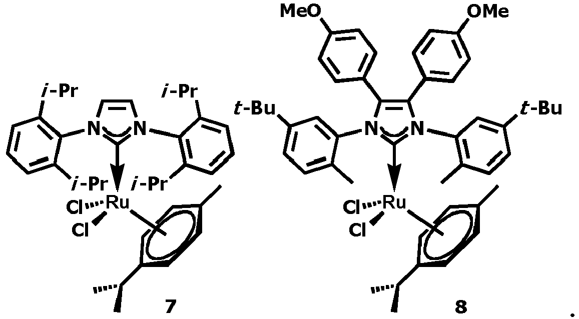

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc; 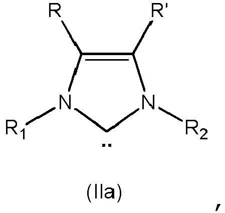 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 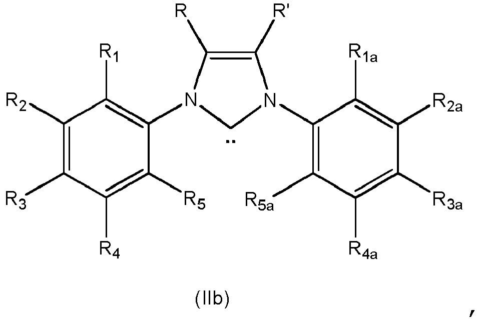 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 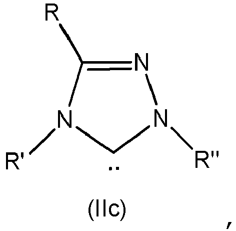 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R'' unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird, die ausgewählt wird aus der Gruppe bestehend aus den Verbindungen 5, 6, und 8

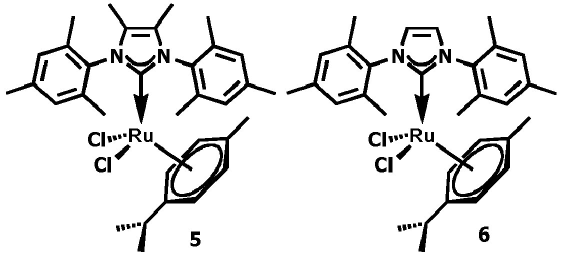

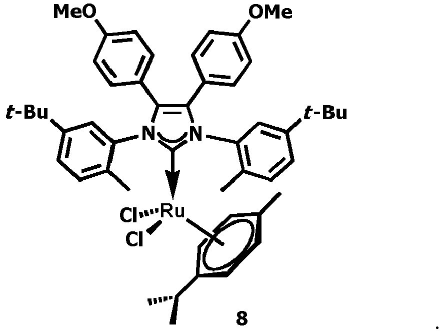

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 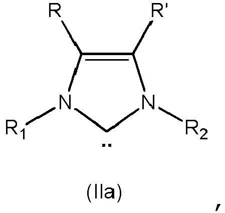 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 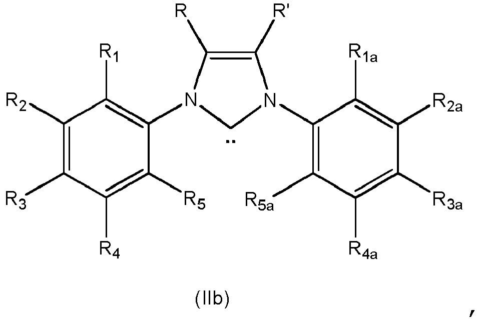 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 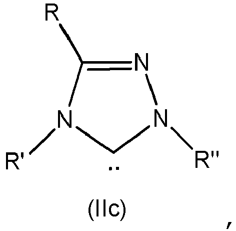 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und R' und R'' unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
e. Zugabe eines Hydrierkatalysators,
f. Umsetzung bei einer Temperatur in einem Bereich von 0°C bis 250°C und bei einem Wasserstoffdruck in einem Bereich von 1 bar bis 100 bar,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird.

In einer Ausführungsform betrifft die Erfindung ein Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
   a = 0 oder 1, b = 1 oder 2, so dass gilt a + b = 2;
   X¹, X² = unabhängig voneinander ausgewählte anionische Liganden;
   L¹ = neutraler π-bindender Ligand;
   L² = N-heterocyclisches Carben der Formel IIa, IIb oder IIc 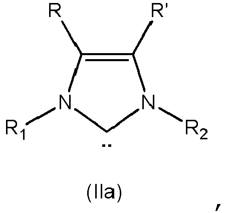 wobei
   R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
   R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 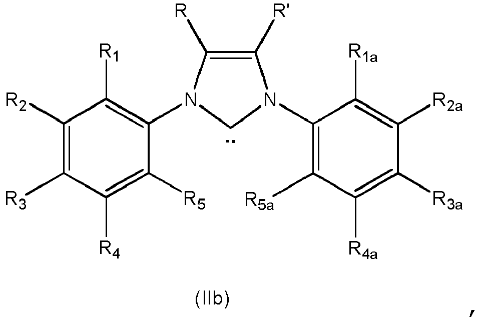 wobei
   R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
   R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 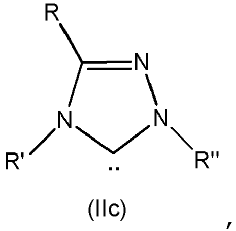 wobei
   R ausgewählt wird aus der Gruppe bestehend aus H, Methyl, Ethyl, n-Propyl, iso-Propyl, n-Butyl, iso-Butyl, Phenyl, und p-Methoxyphenyl; und
   R' und R'' unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C,
e. Zugabe eines Hydrierkatalysators,
f. Umsetzung bei einer Temperatur in einem Bereich von 0°C bis 250°C und bei einem Wasserstoffdruck in einem Bereich von 1 bar bis 100 bar,
wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird, die ausgewählt wird aus der Gruppe bestehend aus den Verbindungen 5, 6, 7, und 8

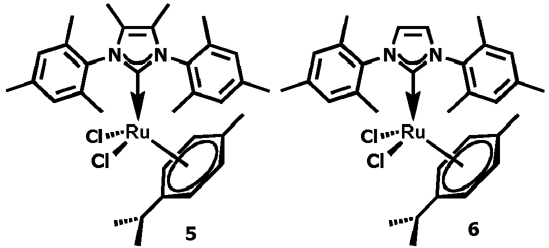

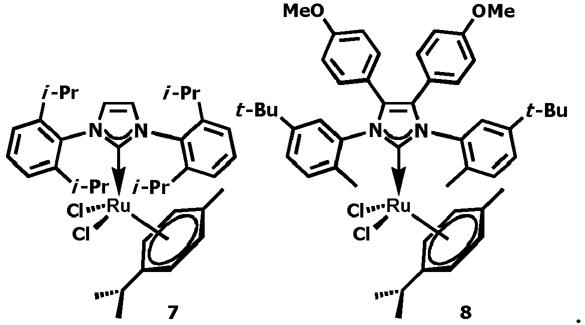

### Experimenteller Teil

Die folgenden Ruthenium-Verbindungen wurden für die Metathesereaktionen eingesetzt:

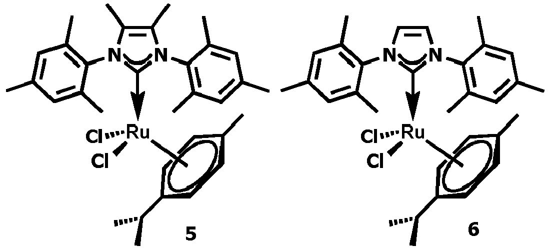

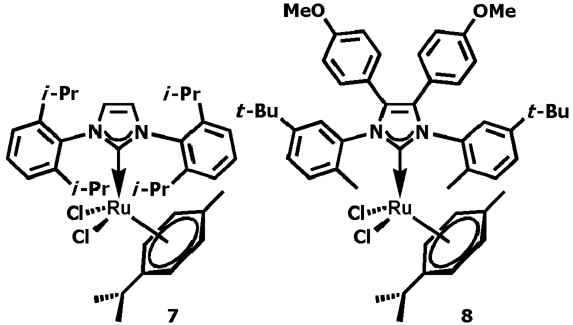

Die nachstehenden Beispiele dienen zur Erläuterung der erfindungsgemäßen Verfahren, ohne die Erfindung darauf zu beschränken.

### Allgemeines

Die Reaktionen und die Herstellung von Stammlösungen luftempfindlicher Verbindungen wurden in einer argongefüllten Glove-Box oder in Standard-Schlenkkolben, sowie Schlenkapparaturen durchgeführt. Alle Lösungsmittel wurden getrocknet und über Molsieb gelagert erworben. Die Cycloalkene wurden vor der Reaktion entgast, wenn unter Schutzgas gearbeitet wurde. Die Molekularmasse (Mₙ) und Polydispersität (D) der oligomeren Produkte wurden gegen Polystyrol mittels Gelpermeationschromatographie bestimmt. Der Umsatz der Cycloalkene wurde gegen Hexadecan mittels Gaschromatographie quantitativ bestimmt.

### BEISPIELE 1 BIS 9

### Ringöffnende, metathetische Polymerisation von Dicyclopentadien ohne Regler

Der Ruthenium-Katalysator **5** wurde bezüglich seiner Aktivität sowie der Molekularmasse (Mₙ) und Polydispersität (D) der Reaktionsprodukte in der ringöffnenden, metathetischen Polymerisation (ROMP) von Dicyclopentadien untersucht.

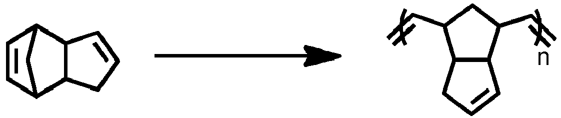

Beispiel 1: Ein sekuriertes 8 mL Glasvial wurde mit 10,0 mmol Dicyclopentadien und 0,1 mmol (10.000 ppm) 5 im Argonstrom beladen, und auf 60°C erwärmt. Die Reaktionsmischung wurde bei dieser Reaktionstemperatur für 1 h im Argonstrom gerührt.

Beispiele 2 bis 3: Ein sekuriertes 8 mL Glasvial wurde mit 0,01 mmol (1.000 ppm) Ruthenium-Katalysator 5 und 3 mL trockenem Toluol im Argonstrom beladen, und die Katalysatorlösung wurde auf 60°C erwärmt. 10,0 mmol Dicyclopentadien wurden zu der warmen Katalysatorlösung bzw. dem Katalysator hinzugegeben. Die Reaktionsmischung wurde bei der gewünschten Reaktionstemperatur für 1 h im Argonstrom gerührt.

Beispiele 4-8: Ein sekuriertes 8 mL Glasvial wurde mit 10,0 mmol Dicyclopentadien im Argonstrom beladen, und die Reaktionsmischung wurde auf 40°C - 80°C erwärmt. 0,00001 - 0,001 mmol (1 - 100 ppm) Ruthenium-Katalysator **5** wurde in 50 - 500 µL trockenem Dichlormethan gelöst und im Argonstrom zu der warmen Reaktionslösung im 8 mL Glasvial überführt. Die Reaktionslösung wurde bei der gewünschten Reaktionstemperatur für 1 h im Argonstrom gerührt.

Beispiel 9: Ein 8 mL Glasvial wurde mit 10,0 mmol Dicyclopentadien beladen, und die Reaktionsmischung wurde auf 60°C erwärmt. 0,0001 mmol (10 ppm) Ruthenium-Katalysator **5** wurde in 50 µL trockenem Dichlormethan gelöst und zu der warmen Reaktionslösung im 8 mL Glasvial überführt. Die Reaktionslösung wurde bei der gewünschten Reaktionstemperatur für 1 h gerührt.

Die konkreten Reaktionsbedingungen und Ergebnisse für die Beispiele 1 bis 9 können Tabelle 2 entnommen werden.

### BEISPIELE 10 UND 11

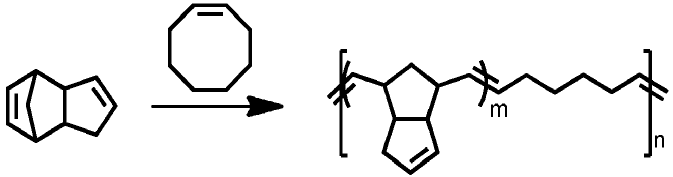

Ein sekuriertes 8 mL Glasvial wurde mit 10,0 mmol Dicyclopentadien und 0,42 - 0,85 mmol Cycloocten im Argonstrom beladen, und die Reaktionsmischung wurde auf 60°C erwärmt. 0,0001 mmol (10 ppm) Ruthenium-Katalysator 5 wurde in 50 µL trockenem Dichlormethan gelöst und im Argonstrom zu der warmen Reaktionslösung im 8 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 10 und 11 können Tabelle 2 entnommen werden.

**Tabelle 2: ROMP von DCPD - Katalysatorbeladung**

| Beispiel | **5** [ppm] | Verdünnungsmittel | Temperatur [°C] | Umsatz [%] ^{[a]} | Mₙ [g/mol] ^{[b]} | D ^{[b]} |
|---|---|---|---|---|---|---|
| 1 | 10.000 | - | 60 | >99 | n.d. | n.d. |
| 2 | 1.000 | 3 mL Toluol | 60 | 99 | n.d. | n.d. |
| 3 | 1.000 | 3 mL Toluol | 60 | 85 | n.d. | n.d. |
| 4 | 100 | 50µL CH₂Cl₂ | 60 | 99 | n.d. | n.d. |
| 5 | 10 | 50µL CH₂Cl₂ | 60 | 61 | n.d. | n.d. |
| 6 | 10 ^{[d]} | 50µL CH₂Cl₂ | 40 | 39 | n.d. | n.d. |
| 7 | 10 | 50µL CH₂Cl₂ | 80 | 32 | 1.608.950 | 1,89 |
| 8 | 1 | 50µL CH₂Cl₂ | 60 | 37 | 1.203.800 | 1,79 |
| 9 | 10^{[c]} | 50µL CH₂Cl₂ | 60 | 26 | 333.115 | 2,84 |
| 10 | 10^{[e]} | 50µL CH₂Cl₂ | 60 | 48 | 241.770 | 3,45 |
| 11 | 10^{[f]} | 50µL CH₂Cl₂ | 60 | 44 | 204.455 | 5,12 |

| | | | | | | |
|---|---|---|---|---|---|---|
| Reaktionsbedingungen: Dicyclopentadien (10 mmol), (p-Cymol)Ru(Me₂IMes) Cl₂ (5) (1 - 10.000 ppm, 1 ppm = 0,0001 mol%), 40°C - 80°C, 1h, Inertgasatmosphäre; [a] bestimmt durch GC mit externem Standard Hexadecan, [b] Mₙ und D bestimmt mittels Gelpermeationschromatographie (GPC) gegen Polystyrol als Standard, n.d. - nicht bestimmbar, Mₙ und D nicht bestimmbar von in THF unlöslichen Polymeren; [c] Reaktion an Luft; [d] 90 min Reaktionszeit; [e] Copolymerisation mit 4,2 mol% Cycloocten; [f] Copolymerisation mit 8,5 mol% Cycloocten. | | | | | | |

### BEISPIELE 12 BIS 27

### Copolymerisation von Dicyclopentadien mit Regler

Der Ruthenium-Katalysator 5 wurde bezüglich seiner Aktivität sowie der Molekularmasse (Mₙ) und Polydispersität (D) der Reaktionsprodukte in der Copolymerisationsreaktion von Dicyclopentadien unter Zusatz von Reglern untersucht.

### BEISPIELE 12 UND 13

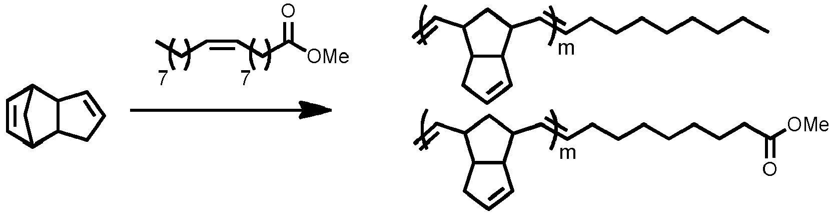

Ein sekuriertes 8 mL Glasvial wurde mit 10,0 mmol Dicyclopentadien und 0,50 - 1,00 mmol Ölsäuremethylester im Argonstrom beladen, und die Reaktionsmischung wurde auf 60°C erwärmt. 0,0001 mmol (10 ppm) Ruthenium-Katalysator 5 wurde in 50 µL trockenem Dichlormethan gelöst und im Argonstrom zu der warmen Reaktionslösung im 8 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 12 und 13 können Tabelle 3 entnommen werden.

### BEISPIELE 14 UND 15

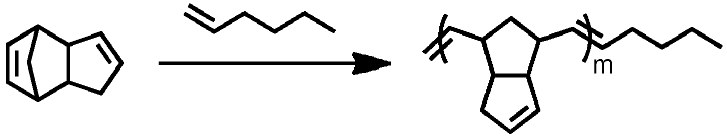

Ein sekuriertes 8 mL Glasvial wurde mit 10,0 mmol Dicyclopentadien und 0,32 - 0,64 mmol 1-Hexen im Argonstrom beladen, und die Reaktionsmischung wurde auf 60°C erwärmt. 0,0001 mmol (10 ppm) Ruthenium-Katalysator 5 wurde in 50 µL trockenem Dichlormethan gelöst und im Argonstrom zu der warmen Reaktionslösung im 8 mL Glasvial überführt. Die Reaktionslösung wurde bei der gewünschten
Reaktionstemperatur für 1 h im Argonstrom gerührt.

Die konkreten Reaktionsbedingungen und Ergebnisse für die Beispiele 14 und 15 können Tabelle 3 entnommen werden.

### BEISPIELE 16-27

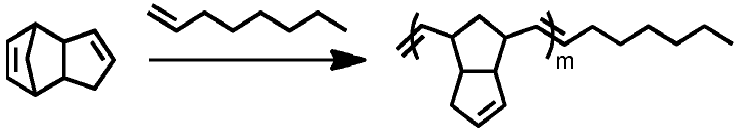

Beispiele 16 und 17: Ein sekuriertes 8 mL Glasvial wurde mit 10,0 mmol Dicyclopentadien und 0,35 - 0,70 mmol 1-Octen im Argonstrom beladen, und die Reaktionsmischung wurde auf 60°C erwärmt. 0,0001 mmol (10 ppm) Ruthenium-Katalysator **5** wurde in 50 µL trockenem Dichlormethan gelöst und im Argonstrom zu der warmen Reaktionslösung im 8 mL Glasvial überführt. Die Reaktionslösung wurde bei der gewünschten Reaktionstemperatur für 1 h im Argonstrom gerührt.

Beispiel 18: Ein 8 mL Glasvial wurde mit 10,0 mmol Dicyclopentadien und 0,35 - 0,70 mmol 1-Octen beladen, und die Reaktionsmischung wurde auf 60°C erwärmt. 0,0001 mmol (10 ppm) Ruthenium-Katalysator **5** wurde in 50 µL Dichlormethan gelöst und zu der warmen Reaktionslösung im 8 mL Glasvial überführt. Die Reaktionslösung wurde bei der gewünschten Reaktionstemperatur für 1 h gerührt.

Beispiele 19-21: Ein sekuriertes 20 mL Glasvial wurde mit 50,0 mmol Dicyclopentadien und 3,5 - 7,0 mmol 1-Octen im Argonstrom beladen, und die Reaktionsmischung wurde auf 55°C erwärmt. 0,0005 mmol (10 ppm) - 0,001 mmol (20ppm) Ruthenium-Katalysator **5** wurde in 100 µL trockenem Dichlormethan gelöst und im Argonstrom zu der warmen Reaktionslösung im 20 mL Glasvial überführt. Die Reaktionslösung wurde bei der gewünschten
Reaktionstemperatur für 1 h im Argonstrom gerührt.

Beispiele 22 und 23: Ein sekurierter 250 mL Schlenkkolben wurde mit 1,0 mol Dicyclopentadien und 70,0 mmol 1-Octen im Argonstrom beladen, und die Reaktionsmischung wurde auf 55°C erwärmt. 0,01 mmol (10 ppm)- 0.02 mmol (20 ppm) Ruthenium-Katalysator **5** wurde in 1 mL trockenem Dichlormethan gelöst und im Argonstrom zu der warmen Reaktionslösung im 250 mL Schlenkkolben überführt. Die Reaktionslösung wurde bei der gewünschten
Reaktionstemperatur für 1 h im Argonstrom gerührt.

Beispiele 24 und 25: Ein sekuriertes 8 mL Glasvial wurde mit 10,0 mmol Dicyclopentadien und 0,35 - 0,70 mmol 1-Octen im Argonstrom beladen, und die Reaktionsmischung wurde auf 60°C erwärmt. 0,001 mmol (100 ppm) Ruthenium-Katalysator **5** wurde in 50 µL trockenem Dichlormethan gelöst und im Argonstrom zu der warmen Reaktionslösung im 8 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 16 bis 25 können Tabelle 3 entnommen werden.

### BEISPIELE 26 UND 27

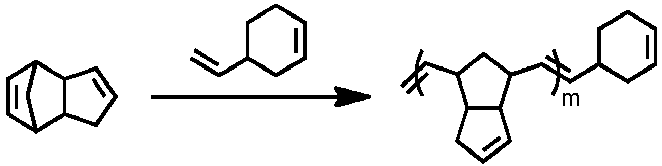

Ein sekuriertes 25 mL Glasvial wurde mit 100,0 mmol Dicyclopentadien und 3,5 - 7,0 mmol 4-Vinyl-1-cyclohexen im Argonstrom beladen, und die Reaktionsmischung wurde auf 60°C erwärmt. 0,001 mmol (10 ppm) Ruthenium-Katalysator **5** wurde in 100 µL trockenem Dichlormethan gelöst und im Argonstrom zu der warmen Reaktionslösung im 25 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 26 und 27 können Tabelle 3 entnommen werden.

**Tabelle 3: Copolymerisierung von DCPD und eines Reglers**

| Beispiel | **5** [ppm] | Regler | Regler [mol%] | Umsatz [%] ^{[a]} | Mₙ [g/mol] ^{[b} | D ^{[b]} |
|---|---|---|---|---|---|---|
| 12 | 10 | Ölsäuremethylester | 5,0 | 40 | 123.860 | 1,34 |
| 13 | 10 | Ölsäuremethylester | 10,0 | 64 | 60.352 | 3,48 |
| 14 | 10 | 1-Hexen | 3,2 | 79 | 4.833 | 2,62 |
| 15 | 10 | 1-Hexen | 6, 4 | 62 | 2.457 | 2,54 |
| 16 | 10 | 1-Octen | 3,5 | 46 | 5.454 | 1,89 |
| 17 | 10 | 1-Octen | 7,0 | 49 | 2.246 | 2,62 |
| 18^{[c]} | 10 | 1-Octen | 3,5 | 31 | 6.663 | 1,62 |
| 19^{[d]} | 10 | 1-Octen | 7,0 | 70 | 5.406 | 2.15 |
| 20^{[d]} | 10 | 1-Octen | 15,0 | 67 | 2.590 | 1,96 |
| 21^{[d]} | 20 | 1-Octen | 7,0 | 77 | 4.563 | 2,20 |
| 22^{[e]} | 10 | 1-Octen | 7,0 | 76 | 3.996 | 1,95 |
| 23^{[e]} | 20 | 1-Octen | 7,0 | 81 | 3.505 | 1, 94 |
| 24 | 100 | 1-Octen | 3,5 | 97 | 7.126 | 2,65 |
| 25 | 100 | 1-Octen | 7,0 | 96 | 7,749 | 3,65 |
| 26 | 10 | 4-Vinyl-1-cyclohexen | 3,5 | 52 | 15.124 | 2,10 |
| 27 | 10 | 4-Vinyl-1-cyclohexen | 7,0 | 64 | 6.430 | 4,12 |

| | | | | | | |
|---|---|---|---|---|---|---|
| Reaktionsbedingungen: Dicyclopentadien (10 mmol), (p-Cymol)Ru(Me₂IMes) Cl₂ (5) (10 - 100 ppm = 0,001 - 0,01 mol%), 60°C, 1h, Inertgasatmosphäre; [a] bestimmt durch GC mit externem Standard Hexadecan, [b] Mₙ und D bestimmt mittels Gelpermeationschromatographie (GPC) gegen Polystyrol als Standard, [c] Reaktion an Luft, [d] 50 mmol Dicyclopentadien, 55°C, [e] 1.000 mmol Dicyclopentadien. | | | | | | |

### BEISPIELE 28 BIS 30

### Katalysatorscreening für die Copolymerisation von Dicyclopentadien mit 1-Octen als Regler

Ruthenium-Katalysatoren **6** bis **8** wurden bezüglich ihrer Aktivität sowie der Molekularmasse (Mₙ) und Polydispersität (D) der Reaktionsprodukte in der Copolymerisationsreaktion von Dicyclopentadien und Zusatz von 1-Octen als Regler untersucht.

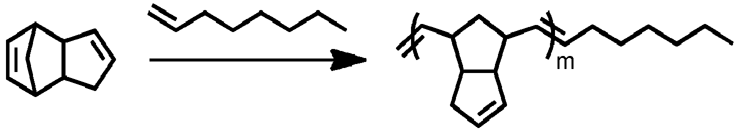

Ein sekuriertes 8 mL Glasvial wurde mit 10,0 mmol Dicyclopentadien und 0,35 mmol 1-Octen im Argonstrom beladen, und die Reaktionsmischung wurde auf 60°C erwärmt. 0,0001 mmol (10 ppm) Ruthenium-Katalysator **6** oder **7** oder **8** wurden in 50 µL trockenem Dichlormethan gelöst und im Argonstrom zu der warmen Reaktionslösung im 8 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 28 bis 30 können Tabelle 4 entnommen werden.

**Tabelle 4: Katalysatorscreening**

| Beispiel | [Ru]-Komplex | Umsatz [%] ^{[a]} | Mₙ [g/mol] ^{[b]} | D ^{[b]} |
|---|---|---|---|---|
| 28 | **6** | 71 | 5.424 | 2,33 |
| 29 | **7** | 22 | 5.102 | 1,16 |
| 30 | **8** | 39 | 8.076 | 1,76 |

Reaktionsbedingungen: Dicyclopentadien (10 mmol), Ru-Komplex **(6 - 8)** (10 ppm = 0,001 mol%), 1-Octen (3,5 mol%), 60°C, 1h, Inertgasatmosphäre; [a] bestimmt durch GC mit externem Standard Hexadecan, [b] Mₙ und D bestimmt mittels Gelpermeationschromatographie (GPC) gegen Polystyrol als Standard.

### BEISPIELE 31 BIS 46

### Copolymerisation von Cycloalkenen mit und ohne Regler

Der Ruthenium-Katalysator 5 wurde bezüglich seiner Aktivität sowie der Molekularmasse (Mₙ) und Polydispersität (D) der Reaktionsprodukte in der Copolymerisationsreaktion von 2,5-Norbornadien, 2-Norbornen, 1,5-Cyclooctadien sowie 1,5-Cyclooctadien und Zusatz von 1-Octen beziehungsweise 4-Vinyl-1-cyclohexen oder Allylacetat als Regler untersucht.

### BEISPIELE 31 BIS 34

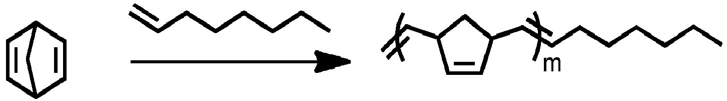

Ein sekuriertes 25 mL Glasvial wurde mit 100,0 mmol 2-Norbornadien (NBD) und 0 - 7,0 mmol 1-Octen im Argonstrom beladen, und die Reaktionsmischung wurde auf 80°C erwärmt. 0,001 - 0,1 mmol (10 - 1000 ppm) Ruthenium-Katalysator **5** wurde in 10 - 1000 µL trockenem Dichlormethan gelöst und im Argonstrom zu der warmen Reaktionslösung im 25 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 31 bis 34 können Tabelle 5 entnommen werden.

### BEISPIELE 35 BIS 37

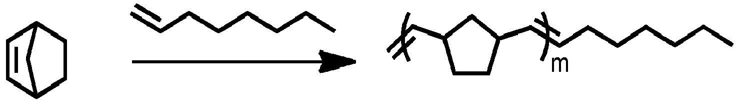

Ein sekuriertes 25 mL Glasvial wurde mit 100,0 mmol 2-Norbornen (NBE) und 0 - 7,0 mmol 1-Octen im Argonstrom beladen, und die Reaktionsmischung wurde auf 60°C erwärmt. 0,001 - 0,01 mmol (10 - 100 ppm) Ruthenium-Katalysator 5 wurde in 10 - 100 µL trockenem Dichlormethan gelöst und im Argonstrom zu der warmen Reaktionslösung im 25 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 35 bis 37 können Tabelle 5 entnommen werden.

### BEISPIELE 38 UND 39

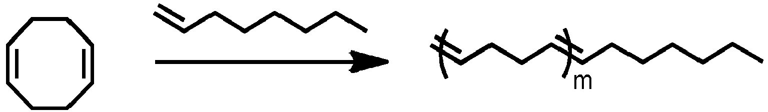

Ein sekuriertes 25 mL Glasvial wurde mit 100,0 mmol 1,5-Cyclooctadien (COD) und 0 - 7,0 mmol 1-Octen im Argonstrom beladen, und die Reaktionsmischung wurde auf 80°C erwärmt. 0,01 mmol (100 ppm) Ruthenium-Katalysator **5** wurde in 100 µL trockenem Dichlormethan gelöst und im Argonstrom zu der warmen Reaktionslösung im 25 mL Glasvial überführt. Die Reaktionslösung wurde bei der gewünschten
Reaktionstemperatur für 1 h im Argonstrom gerührt.

Die konkreten Reaktionsbedingungen und Ergebnisse für die Beispiele 38 und 39 können Tabelle 5 entnommen werden.

### BEISPIELE 40 BIS 42

Ein sekuriertes 25 mL Glasvial wurde mit 100,0 mmol Cycloocten (COE) und 7,0 mmol 1-Octen im Argonstrom beladen, und die Reaktionsmischung wurde auf 80°C erwärmt. 0,001 - 0,01 mmol (10 - 100 ppm) Ruthenium-Katalysator **5** wurde in 10 - 100 µL trockenem Dichlormethan gelöst und im Argonstrom zu der warmen Reaktionslösung im 25 mL Glasvial überführt. Die Reaktionslösung wurde bei der gewünschten Reaktionstemperatur für 1 h im Argonstrom gerührt.

Die konkreten Reaktionsbedingungen und Ergebnisse für die Beispiele 40 bis 42 können Tabelle 5 entnommen werden.

### BEISPIELE 43 BIS 46

Ein sekuriertes 25 mL Glasvial wurde mit 10,0 mmol Cycloocten (COE) und 7,0 mmol 4-Vinyl-1-cyclohexen (VCH) oder Allylacetat im Argonstrom beladen, und die Reaktionsmischung wurde auf 80°C erwärmt. 0,001 - 0,01 mmol (10 - 100 ppm) Ruthenium-Katalysator **5** wurde in 10 - 100 µL trockenem Dichlormethan gelöst und im Argonstrom zu der warmen Reaktionslösung im 25 mL Glasvial überführt. Die Reaktionslösung wurde bei der gewünschten
Reaktionstemperatur für 1 h im Argonstrom gerührt.

Die konkreten Reaktionsbedingungen und Ergebnisse für die Beispiele 43 bis 46 können Tabelle 6 entnommen werden.

**Tabelle 5: Copolymerisierung von Cycloalkenen und 1-Octen**

| Beispiel | Monomer | **5** [ppm] | CH₂Cl₂ [µL] | 1-Octen [mol%] | Temp. [°C] | Umsatz [%] ^{[a]} | Mₙ [g/mol] ^{[b]} | D ^{[b]} |
|---|---|---|---|---|---|---|---|---|
| 31 | NBD | 10 | 10 | 0 | 80 | 40 | 19.761 | 3, 07 |
| 32 | NBD | 10 | 10 | 7 | 80 | 37 | 1.489 | 1,35 |
| 33 | NBD | 100 | 100 | 7 | 80 | 40 | 2.568 | 1,79 |
| 34 | NBD | 1000 | 1000 | 7 | 80 | 84 | 6.775 | 2,46 |
| 35 | NBE | 100 | 100 | 0 | 60 | 87 | 6.385 | 4,50 |
| 36 | NBE | 10 | 10 | 7 | 60 | 80 | 5.007 | 3,55 |
| 37 | NBE | 100 | 100 | 7 | 60 | 98 | 3.683 | 2,69 |
| 38 | COD | 100 | 100 | 0 | 80 | 26 | 42.384 | 2,79 |
| 39 | COD | 100 | 100 | 7 | 80 | 45 | 4.170 | 2,01 |
| 40 | COE | 100 | 100 | 0 | 80 | 99 | 18.520 | 1,21 |
| 41 | COE | 10 | 10 | 7 | 80 | 20 | 3.316 | 1,63 |
| 42 | COE | 100 | 100 | 7 | 80 | 95 | 5.075 | 2,34 |

| | | | | | | | | |
|---|---|---|---|---|---|---|---|---|
| Reaktionsbedingungen: Monomer (10 -100 mmol), (p-Cymol)Ru(Me₂IMes) Cl₂ (5) (10 - 100 ppm = 0,001 - 0,01 mol% als Lösung in 10-100µL CH₂Cl₂), 1h, Inertgasatmosphäre; [a] bestimmt durch GC mit externem Standard Hexadecan, [b] Mₙ und D bestimmt mittels Gelpermeationschromatographie (GPC) gegen Polystyrol als Standard. | | | | | | | | |

**Tabelle 6: Copolymerisierung von Cycloocten und 7 mol% Regler bei 80°C.**

| Beispiel | Regler | **5** [ppm] | CH₂Cl₂ [µL] | Umsatz [%] ^{[a]} | Mₙ [g/mol] ^{[b]} | D ^{[b]} |
|---|---|---|---|---|---|---|
| 43 | 4-Vinyl-1-cyclohexen | 10 | 10 | 85 | 5.346 | 2,86 |
| 44 | 4-Vinyl-1-cyclohexen | 100 | 100 | 99 | 5.435 | 2,26 |
| 45 | Allylacetat | 100 | 100 | 99 | 10.432 | 1,48 |
| 46 | Allylacetat | 50 | 10 | 68 | 5.676 | 1,68 |

| | | | | | | |
|---|---|---|---|---|---|---|
| Reaktionsbedingungen: Monomer (10 -100 mmol), (p-Cymol)Ru(Me₂IMes) Cl₂ (5) (10 - 100 ppm = 0,001 - 0,01 mol%) in 10 - 100 µL trockenem Dichlormethan, 1h, Inertgasatmosphäre; [a] bestimmt durch GC mit externem Standard Hexadecan, [b] Mₙ und D bestimmt mittels Gelpermeationschromatographie (GPC) gegen Polystyrol als Standard. | | | | | | |

### BEISPIELE 47 BIS 52

### Oligomerisierung und Hydrierung von DCPD mit 1-Octen als Regler

Der Hydrierkatalysator [(dppb) Rh (COD) ] (BF₄) **(IX)** wurde bezüglich seiner Hydrieraktivität auf Dicyclopentadien und dessen oligomere Produkte sowie bezüglich seines Einflusses auf die Molekularmasse und Polydispersität der Reaktionsprodukte aus der Oligomerisierungsreaktion mit dem Ruthenium-Katalysator **5** untersucht.

Beispiele 47 bis 50: Ein sekuriertes 20 mL Glasvial wurde mit 50,0 mmol Dicyclopentadien (DCPD) und 7,0 - 15,0 mmol 1-Octen im Argonstrom beladen, und die Reaktionsmischung wurde auf 55°C erwärmt. 0,005 mmol (10 ppm) Ruthenium-Katalysator **5** wurde in 500 µL trockenem Dichlormethan gelöst und im Argonstrom zu der warmen Reaktionslösung im 20 mL Glasvial überführt. Die Reaktionslösung wurde bei der gewünschten Reaktionstemperatur für 1 h im Argonstrom gerührt. 0,05 - 0,5 mmol (100 - 1000 ppm) [(dppb)Rh(COD)] (BF₄) **(IX)** wurden in 50 - 500 µL trockenem Dichlormethan gelöst und im Argonstrom in das 20 mL Glasvial überführt. Das 20 mL Glasvial wurde im Argonstrom in einen 50 mL Autoklaven gestellt, dieser fest verschlossen und 50 bar Wasserstoff aufgepresst. Die Reaktionsmischung wurde im Autoklaven auf 55°C erwärmt und für 20 h bei der gewünschten Reaktionstemperatur gerührt. Unterschritt der Druck im Autoklaven den Wert von 30 bar, wurde erneut ein Wasserstoffdruck von 50 bar durch Aufpressen eingestellt.

Beispiel 51: Ein sekuriertes 20 mL Glasvial wurde mit 50,0 mmol Dicyclopentadien (DCPD) und 15,0 mmol 1-Octen im Argonstrom beladen, und die Reaktionsmischung wurde auf 55°C erwärmt. 0,005 mmol (10 ppm) Ruthenium-Katalysator **5** und 0,5 mmol (1000 ppm) [(dppb)Rh(COD)] (BF₄) **(IX)** wurden in 500 µL trockenem Dichlormethan gelöst und im Argonstrom zu der warmen Reaktionslösung im 20 mL Glasvial überführt. Das 20 mL Glasvial wurde im Argonstrom in einen 50 mL Autoklaven gestellt, dieser fest verschlossen und 50 bar Wasserstoff aufgepresst. Die Reaktionsmischung wurde im Autoklaven auf 55 °C erwärmt und für 20 h bei der gewünschten Reaktionstemperatur gerührt. Unterschritt der Druck im Autoklaven den Wert von 30 bar, wurde erneut ein Wasserstoffdruck von 50 bar durch Aufpressen eingestellt.

Beispiel 52: Ein sekuriertes 20 mL Glasvial wurde mit 50,0 mmol Dicyclopentadien (DCPD) und 15,0 mmol 1-Octen im Argonstrom beladen, und die Reaktionsmischung wurde auf 55°C erwärmt. 0,005 mmol (10 ppm) Ruthenium-Katalysator **5** wurde in 500 µL trockenem Dichlormethan gelöst und im Argonstrom zu der warmen Reaktionslösung im 20 mL Glasvial überführt. Die Reaktionslösung wurde bei der gewünschten Reaktionstemperatur für 1 h im Argonstrom gerührt. Die Reaktionslösung wurde mit 500 µL Butylvinylether versetzt und für 10 min bei 55°C gerührt. 0,5 mmol (1000 ppm) [(dppb)Rh(COD)] (BF₄) **(IX)** wurde in 500 µL trockenem Dichlormethan gelöst und im Argonstrom in das 20 mL Glasvial überführt. Das 20 mL Glasvial wurde im Argonstrom in einen 50 mL Autoklaven gestellt, dieser fest verschlossen und 50 bar Wasserstoff aufgepresst. Die Reaktionsmischung wurde im Autoklaven auf 55°C erwärmt und für 20 h bei der gewünschten Reaktionstemperatur gerührt. Unterschritt der Druck im Autoklaven den Wert von 30 bar, wurde erneut ein Wasserstoffdruck von 50 bar durch Aufpressen eingestellt.

Die konkreten Reaktionsbedingungen und Ergebnisse für die Beispiele 47 bis 52 können Tabelle 7 entnommen werden.

**Tabelle 7: Oligomerisierung und Hydrierung von DCPD mit 1-Octen als Regler**

| | | Copolymerisation ^{[a]} | | | | Hydrierung^{[a']} | | | | | |
|---|---|---|---|---|---|---|---|---|---|---|---|
| Beispiel | 1-Octen [mol%] | Umsatz DCPD [%] ^{[b,c]} | CH₂Cl₂ [µL] | Mₙ [g/mol] ^{[c,d]} | D ^{[c,d]} | **IX** [ppm] | Umsatz DCPD [%] ^{[b,e]} | Ausbeute hydrierte Monomere [%] ^{[f]} | Ausbeute hydrierte Oligomere [%] ^{[g]} | Mₙ [g/mol] ^{[d,e]} | D ^{[d,e]} |
| 47 | 7 | 74 | 500 | 5.406 | 2,15 | 1000 | 99 | 16 | 79 | 4.798 | 1,88 |
| 48 | 7 | 70 | 500 | 5.814 | 2,39 | 100 | 94 | 5 | 17 | 6.156 | 2,37 |
| 49 | 15 | 43 | 500 | 1.927 | 1,59 | 1000 | >99 | 45 | 52 | 1.813 | 1,64 |
| 50 | 15 | 72 | 500 | 2.911 | 1,91 | 500 | 99 | 47 | 42 | 2.637 | 1,71 |
| 51^{[h]} | 15 | 27 | 500 | 3.417 | 1,10 | 1000 | 99 | 75 | 25 | 2.277 | 1,40 |
| 52^{[i]} | 15 | 78 | 500 | 2.977 | 2,05 | 1000 | >99 | 54 | 42 | 2.500 | 1,63 |

| | | | | | | | | | | | |
|---|---|---|---|---|---|---|---|---|---|---|---|
| [a] Reaktionsbedingungen: Dicyclopentadien (50 mmol), (p-Cymol)Ru(Me₂IMes)Cl₂ **(5)** (10 ppm = 0,001 mol%), 55°C, 1h, Inertgasatmosphäre; [a'] Reaktionsbedingungen: [(dppb)Rh(COD)](BF₄) **(IX)** (0 - 1000 ppm = 0 - 0,1 mol%), 55°C, 20 h, 50 bar H₂; [b] bestimmt durch GC mit externem Standard Hexadecan; [c] Umsatz, Mₙ und D vor der Hydrierung [d] Mₙ und D bestimmt mittels Gelpermeationschromatographie (GPC) gegen Polystyrol als Standard; [e] Umsatz, Mₙ und D nach der Hydrierung;[f] Ausbeute von hydrierten Monomeren mit der Molmasse 134 - 136 g/mol bestimmt durch GC mit externem Standard Hexadecan; [g] Ausbeute von hydrierten Oligomeren bestimmt durch NMR; [h] Hydrierkatalysator **IX** während Copolymerisationsreaktion anwesend; [i] **5** nach der Copolymerisationsreaktion mit 500 µL Butylvinylether gequencht. | | | | | | | | | | | |

### Vergleichsversuch 1

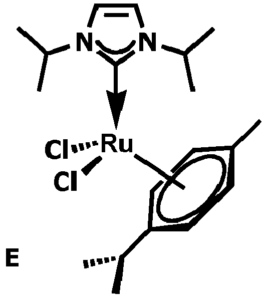

Ein sekuriertes 8 mL Glasvial wurde mit 1.32 g (10,0 mmol) Dicyclopentadien im Argonstrom beladen und die Reaktionsmischung wurde auf 60°C erwärmt. 4.6 mg (0,01 mmol = 1000 ppm) **E** wurde in 500 µL trockenem Dichlormethan gelöst und unter Argon zu der warmen Reaktionslösung im 8 mL Glasvial überführt. Die Reaktionslösung wurde bei 80°C für 24 h unter Argon gerührt. GC Analyse mit Hexadecan als externem Standard zeigte kein Umsatz von DCPD.

### Vergleichsversuch 2

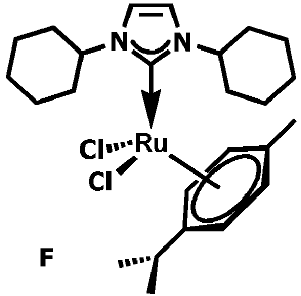

Ein sekuriertes 8 mL Glasvial wurde mit 1.32 g (10,0 mmol) Dicyclopentadien im Argonstrom beladen und die Reaktionsmischung wurde auf 60°C erwärmt. 5.4 mg (0,01 mmol = 1000 ppm) **F** wurde in 500 µL trockenem Dichlormethan gelöst und unter Argon zu der warmen Reaktionslösung im 8 mL Glasvial überführt. Die Reaktionslösung wurde bei 80°C für 24 h unter Argon gerührt. GC Analyse mit Hexadecan als externem Standard zeigte kein Umsatz von DCPD.

## Patentansprüche

1. Verfahren zur Herstellung von Polymeren mittels ringöffnender, metathetischer Polymerisation umfassend die folgenden Schritte:
a. Bereitstellung einer Reaktionsmischung bestehend aus einem Cycloalken oder einem Cylcoalkengemisch,
b. Zugabe einer Ruthenium-Verbindung der allgemeinen Formel RuX¹X²L¹ₐL²_{b} (I), wobei
a = 0 oder 1, b = 1 oder 2, so dass gilt a + b = 2;
X¹, X² = unabhängig voneinander ausgewählte anionische Liganden;
L¹ = neutraler π-bindender Ligand;
L² = N-heterocyclisches Carben der Formel IIa, IIb oder IIc 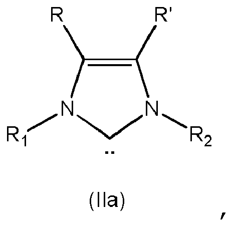 wobei
R und R' unabhängig voneinander ausgewählt werden aus der Gruppe bestehend aus Methyl, Ethyl, n-Propyl, iso-Propyl, n-Butyl, iso-Butyl, Phenyl, und p-Methoxyphenyl; und
R₁ und R₂ unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl; 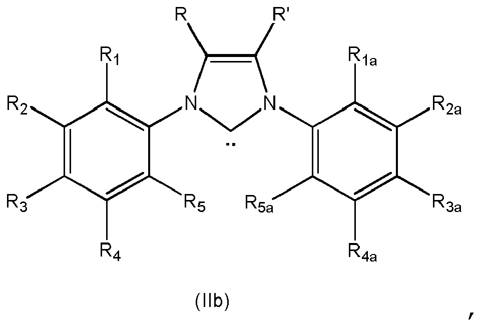 wobei
R und R' unabhängig voneinander ausgewählt werden aus der Gruppe bestehend aus H, Methyl, Ethyl, n-Propyl, iso-Propyl, n-Butyl, iso-Butyl, Phenyl, und p-Methoxyphenyl; und
R₁, R₂, R₃, R₄, R₅, R₁ₐ, R₂ₐ, R₃ₐ, R₄ₐ, R₅ₐ unabhängig voneinander ausgewählt werden aus der Gruppe bestehend aus H, Methyl, Ethyl, n-Propyl, iso-Propyl, n-Butyl, iso-Butyl, tert-Butyl, und Methoxy; 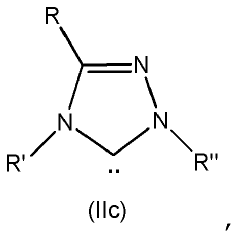 wobei
R ausgewählt wird aus der Gruppe bestehend aus H, Methyl, Ethyl, n-Propyl, iso-Propyl, n-Butyl, iso-Butyl, Phenyl, und p-Methoxyphenyl; und
R' und R'' unabhängig voneinander ausgewählt werden aus der Gruppe bestehend aus Wasserstoff, (C₁-C₁₈)-Alkyl, (C₃-C₈)-Cycloalkyl, (C₃-C₇)-Heterocycloalkyl, (C₆-C₁₄)-Aryl, und (C₃-C₁₄)-Heteroaryl;
c. Zugabe eines Reglers in einem Mol-Verhältnis im Bereich von 1:5 bis 1:1.000 bezogen auf das Cycloalken oder die Summe der Cycloalkene im Cycloalkengemisch,
d. Umsetzung bei einer Temperatur in einem Bereich von 0°C bis 250°C.

2. Verfahren nach Anspruch 1, wobei im Anschluss an Schritt d. ferner die folgenden Schritte umfasst sind:
e. Zugabe eines Hydrierkatalysators,
f. Umsetzung bei einer Temperatur in einem Bereich von 0°C bis 250°C und bei einem Wasserstoffdruck in einem Bereich von 1 bar bis 100 bar.

3. Verfahren gemäß Anspruch 2, wobei das Mol-Verhältnis von Hydrierkatalysator zu eingesetztem Cycloalken im Bereich von 1:100 bis 1:1.000.000 liegt.

4. Verfahren nach einem der Ansprüche 1 bis 3, wobei das Cycloalken ausgewählt wird aus der Gruppe bestehend aus Verbindungen der allgemeinen Formeln (a) - (c)

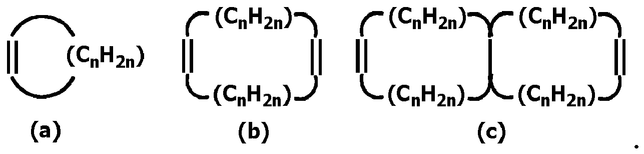

5. Verfahren nach einem der Ansprüche 1 bis 4, wobei der Regler ausgewählt wird aus der Gruppe bestehend aus Allylacetat und Verbindungen der allgemeinen Formeln (d) - (i)

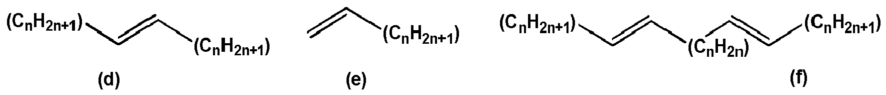

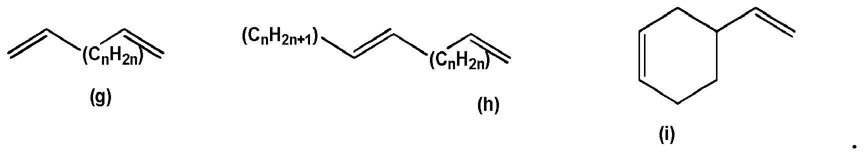

6. Verfahren nach einem der Ansprüche 1 bis 5, wobei das Mol-Verhältnis von Ruthenium-Verbindung zu Cycloalken im Bereich von 1:200 bis 1:1.000.000 liegt.

7. Verfahren nach einem der Ansprüche 1 bis 6, wobei für die Ruthenium-Verbindung nach Formel RuX¹X²L¹ₐL²_{b} (I) gilt a = 1, b = 1, so dass eine Verbindung der allgemeinen Formel RuX¹X²L¹L² (VIII) eingesetzt wird.

8. Verfahren nach Anspruch 7, wobei X¹ und X² gleich sind und Chlor sind, und wobei L¹ ausgewählt wird aus der Gruppe bestehend aus Benzol, Toluol, Xylol, p-Cymol, Trimethylbenzol, Tetramethylbenzol, Hexamethylbenzol, Tetrahydronaphthalin und Naphthalin.

9. Verfahren nach Anspruch 8, wobei L² ausgewählt wird aus der Gruppe bestehend aus N-heterocyclischen Carbenen der Formeln III, IV, VI und VII

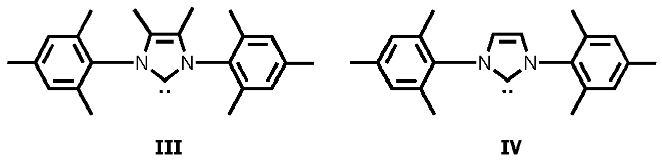

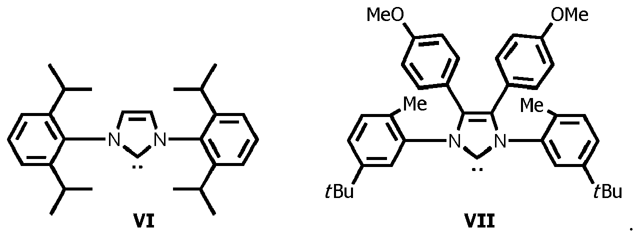

10. Verfahren nach Anspruch 7, wobei die Ruthenium-Verbindung der allgemeinen Formel RuX¹X²L¹L² (VIII) ausgewählt wird aus der Gruppe bestehend aus Verbindungen 5, 6, 7 und 8
